(19) Europäisches Patentamt
European Patent Office
Office européen des brevets

(11) EP 4 261 234 B1

(12) EUROPEAN PATENT SPECIFICATION

(45) Date of publication and mention of the grant of the patent:
**07.05.2025 Bulletin 2025/19**

(21) Application number: **21903043.4**

(22) Date of filing: **26.10.2021**

(51) International Patent Classification (IPC):
***C08C 19/02*** *(2006.01)* ***B60C 1/00*** *(2006.01)*
***C08F 36/04*** *(2006.01)* ***C08K 3/36*** *(2006.01)*
***C08L 9/00*** *(2006.01)* ***C08L 15/00*** *(2006.01)*

(52) Cooperative Patent Classification (CPC):
(C-Sets available)
**C08F 136/06; B60C 1/00; C08C 19/02;**
**C08C 19/22; C08C 19/25; C08C 19/44;** Y02T 10/86
(Cont.)

(86) International application number:
**PCT/JP2021/039499**

(87) International publication number:
**WO 2022/123939 (16.06.2022 Gazette 2022/24)**

(54) **HYDROGENATED DIENE POLYMER, BALE, RUBBER COMPOSITION, AND TIRE**

HYDRIERTES DIENPOLYMER, BALLEN, KAUTSCHUKZUSAMMENSETZUNG UND REIFEN

POLYMÈRE DE DIÈNE HYDROGÉNÉ, BALLE, COMPOSITION DE CAOUTCHOUC ET PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.12.2020 JP 2020203168**

(43) Date of publication of application:
**18.10.2023 Bulletin 2023/42**

(73) Proprietor: **Asahi Kasei Kabushiki Kaisha**
**Tokyo 1000006 (JP)**

(72) Inventors:
- **SUMITANI, Shogo**
  **Tokyo 100-0006 (JP)**
- **MATSUOKA, Daigo**
  **Tokyo 100-0006 (JP)**
- **YASUMOTO, Atsushi**
  **Tokyo 100-0006 (JP)**

(74) Representative: **Strehl & Partner mbB**
**Maximilianstrasse 54**
**80538 München (DE)**

(56) References cited:
**EP-A1- 2 963 087**
**EP-A1- 3 626 771**
**WO-A1-2009/060931**
**WO-A1-2020/175258**
**JP-A- H08 245 839**
**US-A1- 2018 207 983**
**US-B2- 8 158 700**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 136/06, C08F 4/48;**
**C08L 7/00, C08L 15/00, C08L 91/00, C08K 3/36, C08K 3/04, C08K 5/548, C08K 3/22, C08K 5/09, C08K 5/18, C08K 3/06, C08K 5/47, C08K 5/31;**
**C08L 9/06, C08L 9/00, C08L 15/00, C08L 91/00, C08K 3/36, C08K 3/04, C08K 5/548, C08K 3/22, C08K 5/09, C08K 5/18, C08K 3/06, C08K 5/47, C08K 5/31;**
**C08L 9/06, C08L 15/00, C08L 91/00, C08K 3/36, C08K 3/04, C08K 5/548, C08K 3/22, C08K 5/09, C08K 5/18, C08K 3/06, C08K 5/47, C08K 5/31;**
**C08L 15/00, C08L 7/00, C08L 9/00, C08L 91/00, C08K 3/36, C08K 3/04, C08K 5/548, C08K 3/22, C08K 5/09, C08K 5/18, C08K 3/06, C08K 5/47, C08K 5/31;**
**C08L 15/00, C08L 7/00, C08L 91/00, C08K 3/36, C08K 3/04, C08K 5/548, C08K 3/22, C08K 5/09, C08K 5/18, C08K 3/06, C08K 5/47, C08K 5/31;**
**C08L 15/00, C08L 9/00, C08L 91/00, C08K 3/36, C08K 3/04, C08K 5/548, C08K 3/22, C08K 5/09, C08K 5/18, C08K 3/06, C08K 5/47, C08K 5/31;**
**C08L 15/00, C08L 9/06, C08L 91/00, C08K 3/36, C08K 3/04, C08K 5/548, C08K 3/22, C08K 5/09, C08K 5/18, C08K 3/06, C08K 5/47, C08K 5/31**

## Description

### Technical Field

The present invention relates to a hydrogenated diene polymer, a bale, a rubber composition, and a tire.

### Background Art

In recent years, all season tires have been rapidly spread, and improvement of low temperature performance of a tire has become strongly demanded.
As a method for improving low temperature performance of a tire, for purposes of reducing an elastic modulus at a low temperature and assuring high followability of a tread rubber on a road surface at a low temperature, methods in which a rubber material having a low glass transition temperature, such as a high cis polybutadiene rubber or a natural rubber, or an oil working as a plasticizer is added to a rubber composition for a tire have been conventionally proposed.
Such a method has, however, a problem that breaking strength of the rubber composition is lowered.
In consideration of this problem, a method in which a liquid rubber is added to a rubber composition as a plasticizer has been proposed as a method for improving low temperature performance with retaining breaking strength of the rubber composition (see Patent Document 1). Since a liquid rubber has an unsaturated bond, bonding is caused at the time of vulcanization, and thus, breaking strength of the rubber composition is improved.
There arises, however, a problem that the addition of the liquid rubber lowers viscosity of the rubber composition to deteriorate abrasion resistance.
In recent years, in the fields of rubber compositions for tire treads, sheets, films and asphalt modification, a rubber composition containing a rubber-like polymer having an ethylene structure and containing a crosslinkable unsaturated group introduced therein has been proposed for purposes of increasing mechanical strength and permanent compression set. When such a rubber-like polymer is contained, breaking strength of the rubber composition is improved to also improve abrasion resistance of a tire (see, for example, Patent Documents 1 to 5).

### List of Prior Art Documents

### Patent Document

Patent Document 1: Japanese Patent Laid-Open No. 2008-50432
Patent Document 2: International Publication No. WO2003/085010
Patent Document 3: International Publication No. WO2019/151126
Patent Document 4: International Publication No. WO2019/151127
Patent Document 5: International Publication No. WO2019/078083
WO 2009/060931 A1 discloses a hydrogenated (co)polymer rubber having a hydrogenation degree of 50% or more and discloses an example of a (co)polymer rubber having a coupling degree of 31% by use of a silane coupling agent. JP H08-245839 A discloses a hydrogenated modified rubber composition, wherein the hydrogenated modified rubber is coupled using a tin compound and has an N containing modifying group attached.

### Summary of Invention

### Problems to be Solved by Invention

A conventionally proposed rubber-like polymer having an ethylene structure and containing a crosslinkable unsaturated group introduced therein tends to be, however, poor in processability, and has a problem that dispersibility of a silica-based filler in a rubber composition tends to be lowered to impair low fuel consumption performance of the rubber composition.
Therefore, an object of the present invention is, in consideration of the problems of the conventional techniques, to provide a hydrogenated diene polymer to be used in a rubber composition that is excellent in low temperature performance and abrasion resistance, and from which a vulcanizate excellent in breaking strength is obtained.

### Means for Solving Problems

The present inventors have made earnest studies to solve the problems of the conventional techniques, and as a

result, have found that a rubber composition excellent in low temperature performance and abrasion resistance obtained in the form of a vulcanizate, and excellent in breaking strength is obtained by setting a branch number of a hydrogenated diene polymer used in the rubber composition, component ratios of structural units of the polymer, and a hydrogenation rate to fall respectively in specific ranges, and thus, the present invention has been accomplished.

Specifically, the present invention is set out in the appended claims.

Advantages of Invention

According to the present invention, a hydrogenated diene polymer to be used in a rubber composition that is excellent in low temperature performance and abrasion resistance, and from which a vulcanizate excellent in breaking strength can be obtained can be provided.

Mode for Carrying Out Invention

Now, an embodiment for practicing the present invention (hereinafter referred to as the "present embodiment") will be described in detail.

It is noted that the following embodiment is merely illustrative for describing the present invention, and that the present invention is not limited to the following embodiment. The present invention can be practiced with modifications appropriately made within the scope of the claims.

[Hydrogenated Diene Polymer]

A hydrogenated diene polymer of the present embodiment has a branch number (Bn), measured by viscosity detector-equipped GPC-light scattering measurement, of 1.5 or more, satisfies the following expression (S) assuming that component ratios (mol%) of a structural unit represented by the following formula (1), a structural unit represented by the following formula (2), a structural unit represented by the following formula (3), and a structural unit represented by the following formula (4) are respectively a, b, c, and d, and has a hydrogenation rate of 40 to 85%:

$$10 \leq [(a + b)/(a + b + c + d)] \times 100 \leq 70 \qquad \text{Expression (S):}$$

(1) 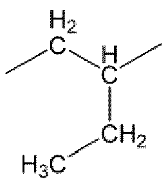

(2) 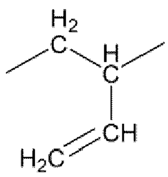

(3) 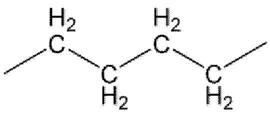

(4) 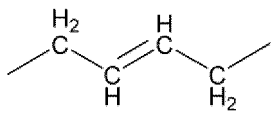

The hydrogenated diene polymer of the present embodiment uses, as a constitutional monomer unit, a conjugated diene monomer unit, and another monomer unit if necessary.

The hydrogenated diene polymer of the present embodiment is characterized by that an aromatic vinyl monomer unit is not substantially contained as a monomer unit constituting the polymer.

It is noted that the term "not substantially contained" means that an "aromatic vinyl compound" is not contained as a polymerizable monomer. Considering a case where it is unavoidably contained as an impurity or the like, the term does not strictly mean that the content is completely zero, but for example, in NMR analysis of a polymer structure, the content is less than a lower limit of a value usually detectable when it is used as a polymerizable monomer.

The hydrogenated diene polymer of the present embodiment has a structure containing an ethylene structure and a conjugated diene monomer unit formed preferably by (co)polymerizing the conjugated diene monomer and then hydrogenating a part of the conjugated diene monomer unit.

The hydrogenated diene monomer of the present embodiment does not substantially contain a structural unit derived from an aromatic vinyl compound (hereinafter also referred to as the "aromatic vinyl monomer unit") as described above. Thus, low temperature performance obtained when a rubber composition using the hydrogenated diene polymer of

the present embodiment is formed into a vulcanizate can be improved.

From this point of view, the term "not substantially contain" used herein means that it is not contained at a level affecting low temperature performance of the conjugated diene polymer. Specifically, a content of the aromatic vinyl monomer unit tends to affect low temperature performance of a vulcanizate, and hence, it is preferable to reduce the content of the aromatic vinyl monomer unit to an extent that the affection thereon is 5% or less. The specific concentration is 0.1% by mass or less based on the mass of the entire hydrogenated diene polymer of the present embodiment.

For example, styrene or the like easily affects low fuel consumption performance obtained when a rubber composition using the hydrogenated diene polymer of the present embodiment is formed into a vulcanizate, and hence, a content of styrene in the hydrogenated diene polymer of the present embodiment is preferably 0.1% by mass or less.

It is preferable that a monomer unit derived from another monomer different from the aromatic vinyl monomer unit is also not contained at a level affecting low temperature performance of a vulcanizate using the hydrogenated diene polymer of the present embodiment.

Low temperature performance is correlated with a low elastic modulus of a rubber composition under low temperature environment. The hydrogenated diene polymer of the present embodiment does not substantially contain an aromatic vinyl monomer unit, and hence has a lower grass transition temperature and is excellent in low temperature performance as compared with SBR. Also, the component ratio "a" of the structural unit represented by the formula (1) formed in a diene polymer through hydrogenation contributes to lowering of an elastic modulus at a low temperature. From this viewpoint, the hydrogenation rate of the hydrogenated diene polymer of the present embodiment is 40 to 85%, and the expression (S): $10 \leq [(a + b)/(a + b + c + d)] \times 100 \leq 70$ is satisfied.

It is preferable that the hydrogenation rate is 40 to 75%, and that the expression (S): $40 \leq [(a + b)/(a + b + c + d)] \times 100 \leq 70$ is satisfied.

It is more preferable that the hydrogenation rate is 40 to 60%, and the expression (S): $50 \leq [(a + b)/(a + b + c + d)] \times 100 \leq 70$ is satisfied.

When the hydrogenated diene polymer of the present embodiment has the hydrogenation rate and the expression (S) respectively falling in the above-described ranges, the structural unit represented by the formula (1) is present in the hydrogenated diene polymer in a sufficient amount, and hence, the component ratio "a" has a sufficient value, and thus, a rubber composition containing the hydrogenated diene polymer is excellent in low temperature performance.

It is noted that the term "monomer" herein refers to a compound before polymerization, and that the term "monomer unit" refers to a constitutional unit contained in a polymer.

The term "ethylene structure" embraces both a structure generated by hydrogenating a part of a double bond portion of a conjugated diene monomer unit, and an ethylene monomer unit obtained when ethylene is used as a monomer.

The hydrogenated diene polymer of the present embodiment can be produced by polymerizing a conjugated diene monomer, and an additional monomer used if necessary, and hydrogenating the resultant.

As a specific method, as described in, for example, International Publication No. WO96/05250, Japanese Patent Laid-Open No. 2000-053706, and International Publication Nos. WO2003/085010, WO2019/151126, WO2019/151127, WO2002/002663, and WO2015/006179, a method in which hydrogenation is performed after a conjugated diene monomer is polymerized by anionic polymerization, or copolymerized with an additional monomer if necessary, with various additives under various conditions is preferably employed for the production.

The conjugated diene monomer is not especially limited, and examples include, but are not limited to, 1,3-butadiene, isoprene, 2,3-dimethyl-1,3-butadiene, 1,3-pentadiene, 3-methyl-1,3-pentadiene, 1,3-hexadiene, and 1,3-heptadiene. Among these, from the viewpoint of industrial availability, 1,3-butadiene and isoprene are preferred, and 1,3-butadiene is more preferred. One of these may be singly used, or two or more of these may be used together.

Examples of the additional monomer include, but are not limited to, nonconjugated polyene compound monomers such as ethylidene norbornene, dicyclopentadiene, and vinyl norbornene; and cyclic nonconjugated polyene compound monomers such as dicyclopentadiene, vinyl norbornene, and ethylidene norbornene. When such an additional monomer is used, balance among break strength, low fuel consumption performance, wet skid resistance, and abrasion resistance obtained in the form of a vulcanizate, particularly in use in a tire tends to be further improved. One of these may be singly used, or two or more of these may be used together.

(Hydrogenation Rate)

The hydrogenated diene polymer of the present embodiment has a hydrogenation rate of 40% or more, preferably 45% or more, more preferably 51% or more, and further preferably 55% or more.

When the hydrogenation rate is 40% or more, an amount of the ethylene structure is increased, and hence a molecular weight between molecular chain entangled portions, namely, a minimum molecular weight of one molecular chain necessary for entangling in one portion with another molecular chain, is reduced, and thus, the number of entanglements of the molecular chains is increased, resulting in that breaking strength obtained in the form of a vulcanizate

tends to be further improved.

On the other hand, the hydrogenation rate of the hydrogenated diene polymer of the present embodiment is 85% or less, preferably 80% or less, more preferably 75% or less, further preferably 71% or less, and still further preferably 65% or less.

When the hydrogenation rate is 85% or less, ease of crosslinking is improved, and a hysteresis loss is reduced because there are no ethylene structure-derived microcrystals, resulting in that low fuel consumption performance obtained in the form of a vulcanizate tends to be further improved.

The hydrogenation rate can be calculated by a method employing $^1$H-NMR described in Examples.

The hydrogenation rate of the hydrogenated diene polymer of the present embodiment can be controlled to fall in the above-described numerical range by adjusting an amount of a double bond contained in the conjugated diene monomer unit.

(Branch Number)

From the viewpoint of improving processability typified by kneadability with a filler or a crosslinking agent with suppressing cold flow otherwise caused in the form of a rubber bale, the hydrogenated diene polymer of the present embodiment has a branch number (Bn) obtained by viscosity detector-equipped GPC-light scattering measurement (hereinafter also simply referred to as the "branch number (Bn)") of 1.5 or more, preferably 3.0 or more, and more preferably 4.0 or more.

A branch number (Bn) refers to the number of polymer chains bonded to a longest polymer main chain.

For example, the branch number (Bn) of 2 or more means that the hydrogenated diene polymer of the present embodiment has 2 or more polymer side chains based on a substantially longest polymer main chain.

The branch number (Bn) of the hydrogenated diene polymer of the present embodiment is defined, using a contraction factor (g') measured by viscosity detector-equipped GPC-light scattering measurement, as $g' = 6\,Bn/\{(Bn + 1)(Bn + 2)\}$.

In general, a branched polymer tends to have a smaller molecule as compared with a linear polymer having the same absolute molecular weight.

A contraction factor (g') is an index of a size proportion occupied by a molecule as compared with that in a linear polymer assumed to have the same absolute molecular weight. In other words, as the branch number of a polymer is larger, the contraction factor (g') tends to be smaller.

Regarding the contraction factor, an intrinsic viscosity is used as an index of the molecular size in the hydrogenated diene polymer of the present embodiment, and a linear polymer is assumed to satisfy a relationship, $[\eta] = -3.883\ M^{0.771}$. In this expression, M represents an absolute molecular weight.

A contraction factor expresses, however, a reduction ratio of a molecular size, and does not accurately express a branch structure of the polymer.

Therefore, a value of the contraction factor (g') at each absolute molecular weight of the hydrogenated diene polymer is used to calculate the branch number (Bn) of the hydrogenated diene polymer. The thus calculated "branch number (Bn)" accurately expresses the number of polymers directly or indirectly bonded to a longest main chain structure.

The calculated branch number (Bn) is an index expressing the branch structure of the hydrogenated diene polymer.

For example, in a general 4-branched star polymer (having 4 polymer chains connected to a center portion), 2 polymer chain arms are bonded to a longest polymer main chain structure, and hence the branch number (Bn) is evaluated as 2.

In a general 8-branched star polymer, 6 polymer chain arms are bonded to a longest polymer main chain structure, and hence the branch number (Bn) is evaluated as 6.

Here, the term "branch" means one formed by direct or indirect bond of another polymer to one polymer. Besides, the term "branch number (Bn)" corresponds to the number of polymers directly or indirectly bonded to a longest main chain structure.

The hydrogenated diene polymer of the present embodiment has the branch number (Bn) of 1.5 or more, and therefore, cold flow otherwise caused in the form of a rubber bale can be suppressed, processability (workability) in forming a vulcanizate therefrom is very excellent, and breaking strength and elongation at break obtained in the form of a vulcanizate are excellent.

From a similar viewpoint, the hydrogenated diene polymer of the present embodiment has the branch number (Bn) of preferably 3.0 or more, and more preferably 4.0 or more.

An upper limit of the branch number (Bn) is not especially limited, may be equal to or larger than a detection limit, and is preferably 84 or less, more preferably 80 or less, further preferably 64 or less, and still further preferably 57 or less.

When the branch number (Bn) is 84 or less, the hydrogenated diene polymer of the present embodiment tends to be excellent in breaking strength and elongation at break obtained in the form of a vulcanizate.

(Expression (S))

The hydrogenated diene polymer of the present embodiment satisfies the following expression (S) assuming that component ratios (mol%) of a structural unit represented by the following formula (1), a structural unit represented by the following formula (2), a structural unit represented by the following formula (3), and a structural unit represented by the following formula (4) are respectively a, b, c, and d:

$$10 \leq [(a + b)/(a + b + c + d)] \times 100 \leq 70 \qquad \text{Expression (S):}$$

The ratios a, b, c, and d can be controlled by adjusting the type and the amount of a polar compound to be added, a polymerization temperature, and the amount of hydrogen to be reacted in polymerization of a polymer before hydrogenation.

(1)
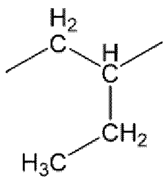

(2)
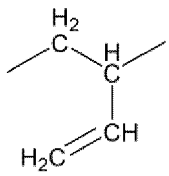

(3)
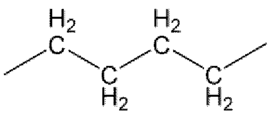

(4)
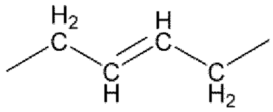

The expression (S) represents a molar ratio (mol%) between a 1,2-vinyl bond and a hydrogenated 1,2-vinyl bond in the hydrogenated diene polymer.

In the hydrogenated diene polymer of the present embodiment, from the viewpoint of improving wet skid resistance, the expression (S) is 10 mol% or more, more preferably 15 mol% or more, and further preferably 20 mol% or more.

From the viewpoint of improving abrasion resistance, the expression (S) is 70 mol% or less, preferably 60 mol% or less, more preferably 40 mol% or less, and further preferably 30 mol% or less.

Examples of a method for controlling the expression (S) to fall in the above-described range include adjustment of a polymerization temperature, and a method in which a polar compound is added. For example, when a polar compound in 0.1 molar equivalent per mole of an organolithium compound is added, the 1,2-vinyl bond can be increased by about 2%.

It is noted that (a + c)/(a + b + c + d) calculated based on the a, b, c, and d indicates the hydrogenation rate.

When a conjugated diene-based polymer containing the structural unit represented by the formula (2) and the structural unit represented by the formula (4) is hydrogenated, the structural unit represented by the formula (2) priorly reacts to form the structural unit represented by the formula (1). In a hydrogenation reaction described in the present embodiment, assuming that the total amount of the structural unit represented by the formula (2) is 100 mol%, a reaction of the structural unit represented by the formula (4) tends to start after 80 to 90 mol% thereof is hydrogenated to form the structural unit represented by the formula (1).

A method for measuring the expression (S) based on a butadiene bond unit contained in the hydrogenated diene polymer of the present embodiment is not especially limited, and for example, the measurement can be performed by a method described in Examples below.

(Expression (X))

In the hydrogenated diene polymer of the present embodiment, assuming that the component ratios (mol%) of the structural units respectively represented by the formulas (1) to (4) are respectively a, b, c, and d, an expression (X) using these a, b, c, and d is defined as follows:

$$\text{Expression (X)} = (a + c)/(a + b)$$

The expression (X) represents a ratio between a repeating unit with a low linearity and a hydrogenated repeating unit in the hydrogenated diene polymer.

When the ratios "b" and "a" of the 1,2-vinyl bond and the hydrogenated 1,2-vinyl bond are low, linearity of the

numerator is increased, and hence the denominator is reduced to increase the expression (X). "a" affects both the numerator and the denominator, and the magnitude of "c" easily contributes the magnitude of the numerator, and hence, as the component ratio "c" of the structural unit of the formula (3) is larger, crystallinity derived from an ethylene structure chain tends to be formed. A crystal structure abruptly increases the elastic modulus of a diene polymer, and hence the resultant rubber becomes hard.

The present inventors have presumed that the expression (X) indicates the above-described property reflecting the structure of the hydrogenated diene polymer, and have examined, by using a specific hydrogenated diene polymer, the relationship between a specific numerical value and the property of the hydrogenated diene polymer, resulting in finding the following trend:

The expression (X) is preferably 2.0 or less, more preferably 1.8 or less, and further preferably 1.6 or less. When the expression (X) is 2.0 or less, crystals derived from an ethylene structure chain can be inhibited from being formed in the hydrogenated diene polymer, and thus, abrupt increase of the elastic modulus can be avoided. As a result, the hydrogenated diene polymer of the present invention does not become too hard, and moldability of a bale containing the hydrogenated diene polymer is excellent.

The moldability of a bale can be measured by a method described in Examples below.

The expression (X) of the hydrogenated diene polymer of the present invention is preferably 0.8 or more, more preferably 1.0 or more, and further preferably 1.2 or more. When the expression (X) is 0.8 or more, the structure of the hydrogenated diene polymer satisfies, for example, a = 32, b = 8, c = 0, and d = 60. In the hydrogenated diene polymer of the present embodiment, "b" is priorly hydrogenated when "b" and "d" are both present. Accordingly, when the expression (X) is 0.8 or more, the ratio "b" corresponding to a reactive group unsaturated group in the hydrogenated diene polymer can be 8% or less, and thus, thermal stability of the hydrogenated diene polymer can be improved. As a result, in kneading a rubber composition using the hydrogenated diene polymer of the present embodiment, gelation is difficult to occur.

The expression (X) can be controlled to fall in the above-described numerical range by adjusting the type and the amount of a polar compound to be added, a polymerization temperature, and the amount of hydrogen to be reacted in polymerization of a polymer before hydrogenation.

(Modification Ratio)

From the viewpoint of improving low fuel consumption performance obtained in the form of a vulcanizate, the hydrogenated diene polymer of the present embodiment preferably contains a nitrogen atom.

A nitrogen atom can be introduced with a modifier. Thus, dispersibility of a silica-based inorganic filler used as a reinforcing material of a tire tends to be further improved.

From the viewpoint of dispersibility of a silica-based inorganic filler used as a reinforcing material of a tire, the hydrogenated diene polymer of the present embodiment has a modification ratio of 70% by mass or more, and further preferably 75% by mass or more.

An upper limit of the modification ratio of the hydrogenated diene polymer of the present embodiment is not especially limited, and is preferably 98% by mass or less, more preferably 95% by mass or less, and further preferably 90% by mass or less from the viewpoint that a viscosity of a compound obtained after kneading is lowered to improve processability.

Herein, the term "modification ratio" refers to a mass ratio of a polymer having a nitrogen atom-containing functional group to the total amount of the hydrogenated diene polymer.

A position where a nitrogen atom is introduced in the hydrogenated diene polymer of the present embodiment may be any one of a polymerization initiation terminal, a molecular chain (including a graft), and a polymerization terminal of the hydrogenated diene polymer.

When the hydrogenated diene polymer of the present embodiment is produced by performing hydrogenation after polymerizing a conjugated diene monomer, a nitrogen atom is introduced preferably using a coupling agent containing a nitrogen atom from the viewpoints of polymerization productivity, a high modification ratio, and low fuel consumption performance obtained in the form of a vulcanizate.

As a coupling agent containing a nitrogen atom, from the viewpoints of polymerization productivity and a high modification ratio, an isocyanate compound, an isothiocyanate compound, an isocyanuric acid derivative, a nitrogen group-containing carbonyl compound, a nitrogen group-containing vinyl compound, a nitrogen group-containing epoxy compound, a nitrogen group-containing alkoxysilane compound and the like are preferred.

From the viewpoint of improvement of processability in obtaining a vulcanizate, the coupling agent preferably has a larger branch number. The branch number is not especially limited, and is preferably 3 or more, and more preferably 4 or more from the viewpoint of inhibiting cold flow. An upper limit of the branch number is not especially limited, and is preferably 30 or less from the viewpoint of productivity.

As such a coupling agent containing a nitrogen atom, from the viewpoints of polymerization productivity of the hydrogenated diene polymer, a high modulation ratio, and a tensile strength obtained in the form of a tire, a nitrogen group-containing alkoxysilane compound is more preferred.

The nitrogen group-containing alkoxysilane compound is not limited to, and examples include 2,2-dimethoxy-1-(3-trimethoxysilylpropyl)-1-aza-2-silacyclopentane, 2,2-diethoxy-1-(3-triethoxysilylpropyl)-1-aza-2-silacyclopentane, 2,2-dimethoxy-1-(4-trimethoxysilylbutyl)-1-aza-2-silacyclohexane, 2,2-dimethoxy-1-(5-trimethoxysilylpentyl)-1-aza-2-silacycloheptane, 2,2-dimethoxy-1-(3-dimethoxymethylsilylpropyl)-1-aza-2-silacyclopentane, 2,2-diethoxy-1-(3-diethoxyethylsilylpropyl)-1-aza-2-silacyclopentane, 2-methoxy-2-methyl-1-(3-trimethoxysilylpropyl)-1-aza-2-silacyclopentane, 2-ethoxy-2-ethyl-1-(3-triethoxysilylpropyl)-1-aza-2-silacyclopentane, 2-methoxy-2-methyl-1-(3-dimethoxymethylsilylpropyl)-1-aza-2-silacyclopentane, 2-ethoxy-2-ethyl-1-(3-diethoxyethylsilylpropyl)-1-aza-2-silacyclopentane, tris(3-trimethoxysilylpropyl)amine, tris(3-methyldimethoxysilylpropyl)amine, tris(3-triethoxysilylpropyl)amine, tris(3-methyldiethoxysilylpropyl) amine, tris(trimethoxysilylmethyl)amine, tris(2-trimethoxysilylethyl) amine, tris(4-trimethoxysilylbutyl)amine, tetrakis[3-(2,2-dimethoxy-1-aza-2-silacyclopentane)propyl]-1,3-propanediamine, tetrakis(3-trimethoxysilylpropyl)-1,3-propanediamine, tetrakis(3-trimethoxysilylpropyl)-1,3-bisaminomethylcyclohexane, and N1-(3-(bis(3-(trimethoxysilyl)propyl)amino)propyl)-N1-methyl-N3-(3-(methyl(3-(trimethoxysilyl)propyl)amino)propyl)-N3-(3-(trimethoxysilyl)propyl)-1,3-propanediamine.

When the hydrogenated diene polymer of the present embodiment is a copolymer of ethylene and a conjugated diene monomer, from the viewpoint of low fuel consumption performance, abrasion resistance and flexibility obtained in the form of a vulcanizate, a tin atom, a nitrogen atom, or a silicon atom is preferably contained.

From the viewpoint of productivity of the hydrogenated diene polymer, it is preferable to apply a method in which a coupling agent containing a tin atom, a nitrogen atom, or a silicon atom is used for the introduction when the polymerization reaction reaches 100%.

The coupling agent containing a tin atom, a nitrogen atom, or a silicon atom include, but not limited to, a tin-containing compound such as dioctyltin bis(1-octadecyl maleate), an isocyanate compound such as 4,4-diphenylmethane diisocyanate, and an alkoxysilane compound such as glycidylpropyltrimethoxysilane.

(Weight Average Molecular Weight)

From the viewpoints of shape stability of a molded body comprising a rubber composition containing the hydrogenated diene polymer, and a tensile strength and abrasion resistance of a crosslinked product using the rubber composition, a weight average molecular weight of the hydrogenated diene polymer of the present embodiment is preferably 150,000 or more, and more preferably 200,000 or more.

On the other hand, from the viewpoint of processability obtained when the hydrogenated diene polymer of the present embodiment is formed into a crosslinking rubber composition, it is preferably 1,000,000 or less, more preferably 500,000 or less, and further preferably 400,000 or less.

From the viewpoint of low fuel consumption performance obtained when the hydrogenated diene polymer of the present embodiment is used in the form of a vulcanizate, a molecular weight distribution (= weight average molecular weight/number average molecular weight) of the hydrogenated diene polymer of the present embodiment is preferably 2.0 or less, more preferably 1.8 or less, and further preferably 1.6 or less.

On the other hand, from the viewpoint of processability obtained when the hydrogenated diene polymer of the present embodiment is formed into a crosslinking rubber composition, the molecular weight distribution of the hydrogenated diene polymer is preferably 1.05 or more, more preferably 1.2 or more, and further preferably 1.4 or more.

The weight average molecular weight and the molecular weight distribution can be calculated based on a molecular weight, in terms of polystyrene, measured by GPC (gel permeation chromatography).

(Additives)

Additives such as a deactivating agent and a neutralizer may be added if necessary to the hydrogenated diene polymer of the present embodiment at a final stage of polymerization process.

Examples of the deactivating agent include, but are not limited to, water; and alcohols such as methanol, ethanol, and isopropanol.

Here, the final stage of polymerization process refers to a state where 95% or more of monomers added have been consumed in the polymerization.

Examples of the neutralizer include, but are not limited to, carboxylic acids such as stearic acid, oleic acid, and versatic acid (a carboxylic acid mixture having 9 to 11 carbon atoms, mainly 10 carbon atoms, and having many branches); an aqueous solution of an inorganic acid, and carbon dioxide gas.

At the final stage of polymerization process of the hydrogenated diene polymer, a rubber stabilizer is preferably added from the viewpoints of prevention of gel formation and processing stability.

Preferable examples of the rubber stabilizer include, but are not limited to, antioxidants such as 2,6-di-tert-butyl-4-hydroxytoluene (hereinafter sometimes referred to as "BHT"), n-octadecyl-3-(4'-hydroxy-3',5'-di-tert-butylphenol)propionate, and 2-methyl-4,6-bis[(octylthio)methyl]phenol.

Besides, at the final stage of polymerization process or the like of the hydrogenated diene polymer, a rubber softener may be added if necessary for improving productivity of the polymer, and processability obtained when an inorganic filler or the like is blended in producing a tire.

The rubber softener is not especially limited, and examples include an extender oil, a liquid rubber, and a resin. From the viewpoints of processability, productivity, and economic performance, an extender oil is preferred.

As a method for adding a rubber softener to the hydrogenated diene polymer of the present embodiment, although not limited to the following, a method in which the rubber softener is added to a polymer solution to be mixed, and the thus obtained polymer solution containing the rubber softener is subjected to desolvation is preferably employed.

Preferable examples of the extender oil include an aromatic oil, a naphthenic oil, and a paraffin oil. Among these, from the viewpoint of environmental safety, and from the viewpoints of oil bleed prevention and wet skid resistance, an aroma substitute oil containing 3% by mass or less of polycyclic aromatic (PCA) component in accordance with the IP 346 method is preferred.

Examples of the aroma substitute oil include TDAE (treated distillate aromatic extracts) and MES (mild extraction solvate) described in Kautschunk Gummi Kunststoffe 52 (12) 799 (1999), and RAE (residual aromatic extracts).

A content of the extender oil in a rubber composition using the hydrogenated diene polymer of the present embodiment is preferably 30% by mass or less, more preferably 20% by mass or less, further preferably 10% by mass or less, and still further preferably 5% by mass or less from the viewpoint of suppressing degradation over time caused in the form of a tire.

Preferable examples of the resin include, but are not limited to, an aromatic petroleum resin, a coumarone-indene resin, a terpene-based resin, a rosin derivative (including a wood oil resin), tall oil, a derivative of tall oil, a rosin ester resin, a natural or synthetic terpene resin, an aliphatic hydrocarbon resin, an aromatic hydrocarbon resin, a mixed aliphatic/aromatic hydrocarbon resin, a coumarin-indene resin, a phenol resin, a p-tert-butylphenol-acetylene resin, a phenolformaldehyde resin, a xylene-formaldehyde resin, a monoolefin oligomer, a diolefin oligomer, a hydrogenated aromatic hydrocarbon resin, a cyclic aliphatic hydrocarbon resin, a hydrogenated hydrocarbon resin, a hydrocarbon resin, a hydrogenated wood oil resin, a hydrogenated oil resin, and an ester of a hydrogenated oil resin and a monofunctional or polyfunctional alcohol.

One of these resins may be singly used, or two or more of these may be used in combination. When hydrogenated, all unsaturated groups may be hydrogenated, or some may be left not hydrogenated.

As an effect obtained by adding a resin, not only processability in obtaining a rubber composition by compounding the hydrogenated diene polymer, a filler and the like is improved but also break strength obtained in the form of a vulcanizate is improved.

An amount of the extender oil, the liquid rubber or the resin to be added as the rubber softener is preferably 5 parts by mass or more, more preferably 10 parts by mass or more, and further preferably 20 parts by mass or more based on 100 parts by mass of the hydrogenated diene polymer. When the amount to be added falls in this range, a rubber composition excellent in abrasion resistance and crack resistance tends to be obtained. The amount is preferably 35 parts by mass or less, more preferably 30 parts by mass or less, and further preferably 25 parts by mass or less from the viewpoint of improvement of low fuel consumption performance.

As a method for obtaining the hydrogenated diene polymer of the present embodiment from the polymer solution with the solvent removed, any of known methods can be employed. Examples of the methods include a method in which the solvent is separated by steam stripping or the like, and the hydrogenated diene polymer is then filtered, and obtained by dehydration and drying, a method in which the solution is concentrated in a flushing tank, and the resultant is devolatilized with a vent extruder or the like, and a method in which the solution is directly devolatilized with a drum dryer or the like.

(Aluminum Content)

In the hydrogenated diene polymer of the present embodiment, an aluminum content is preferably less than 2 ppm. When the content is within this range, viscosity of the hydrogenated diene polymer of the present embodiment tends to be able to be inhibited from increasing over time.

The viscosity of the hydrogenated diene polymer of the present embodiment can be inhibited from increasing over time by suppressing an aluminum concentration therein to be low for the following reason: When the aluminum content in the hydrogenated diene polymer is 2 ppm or more, a compound containing aluminum dispersed in the form of a fine particle interacts with a hetero atom of the hydrogenated diene polymer or a residue of a coupling agent, which probably increases the viscosity. Therefore, when the aluminum content is less than 2 ppm, this viscosity increase can be inhibited.

In particular, when the hydrogenated diene polymer contains a nitrogen atom, and in addition, the nitrogen atom is easily changed to primary amine, and a coupling agent having alkoxysilane is further contained, the effect of inhibiting the viscosity from increasing over time is remarkably exhibited by setting the aluminum content to less than 2 ppm.

The aluminum content in the hydrogenated diene polymer can be measured by a method described in Examples below, and can be controlled to fall in the above-described numerical range by adjusting the types and the amounts to be added of a polymerization catalyst and a hydrogenation catalyst, and conditions in decalcification or solvent removal process described below.

[Method for Producing Hydrogenated Diene-based Polymer]

The hydrogenated diene polymer of the present embodiment can be produced through polymerization process, modification process, and hydrogenation process.

(Polymerization Process)

A polymerization method employed in the polymerization process is not especially limited, and any one of a solution polymerization method, a gas phase polymerization method, and a bulk polymerization method can be employed, and from the viewpoint of commercial production, a solution polymerization method is particularly preferred.
As polymerization mode, batch mode is preferably employed from the viewpoint that the molecular structure can be easily controlled because a side reaction is thus inhibited in the present embodiment.
When a solution polymerization method is employed, a monomer concentration in a solution is preferably 5% by mass or more, and more preferably 10% by mass or more. When the monomer concentration in the solution is 5% by mass or more, an amount of the polymer to be obtained is sufficient, which is preferable from the viewpoint of cost. The monomer concentration in the solution is preferably 50% by mass or less, and more preferably 30% by mass or less. When the monomer concentration in the solution is 50% by mass or less, the viscosity of the solution can be prevented from becoming too high, and hence stirring can be easily performed, and the polymerization process tends to be easily performed.

<Polymerization Initiator>

When anionic polymerization is performed in the polymerization process, a polymerization initiator is not especially limited, but an organolithium compound is preferably used.
The organolithium compound is preferably one containing an alkyl group having 2 to 20 carbon atoms, and examples include, but are not limited to, ethyllithium, n-propyllithium, isopropyllithium, n-butyllithium, sec-butyllithium, tert-butyllithium, tert-octyllithium, n-decyllithium, phenyllithium, 2-naphthyllithium, 2-butyl-phenyllithium, 4-phenyl-butyllithium, cyclohexyllithium, cyclopentyllithium, and a reaction product of diisopropenylbenzene and butyllithium. Among these, n-butyllithium and sec-butyllithium are preferred from the viewpoints of availability, safety, and the like.
When coordination polymerization is performed in the polymerization process, a polymerization catalyst composition described in, for example, Japanese Patent Laid-Open No. 2020-45500 is preferably used as the polymerization initiator.

<Polymerization Method>

As a method for producing a diene polymer by anionic polymerization or coordination polymerization of a prescribed monomer with a polymerization initiator is not especially limited, and any of conventionally known methods can be employed.
Specifically, in an organic solvent inert to the reaction, for example, in a hydrocarbon-based solvent such as an aliphatic, alicyclic, or aromatic hydrocarbon compound, with, for example, butyllithium used as a polymerization initiator, and in the presence of a polar compound if necessary, 1,3-butadiene, ethylene and the like are polymerized, and thus, a target diene polymer can be obtained.
<Hydrocarbon-based Solvent>
The hydrocarbon-based solvent is preferably a hydrocarbon having 3 to 8 carbon atoms, and examples include, but are not limited to, propane, n-butane, isobutane, n-pentane, isopentane, n-hexane, cyclohexane, propene, 1-butene, isobutene, trans-2-butene, cis-2-butene, 1-pentene, 2-pentene, 1-hexene, 2-hexene, benzene, toluene, xylene, and ethylbenzene.
One of these may be singly used, or a mixture of two or more of these may be used.

<Polar Compound Used in Anionic Polymerization>

In the polymerization process, a polar compound may be added.
A polar compound is a compound used for controlling a microstructure of a conjugated diene portion of a polymer.

For example, it is a compound increasing a 1,2-vinyl bond in butadiene, or a 3,4-bond in isoprene.

The polar compound is not especially limited, and an arbitrary one of known compounds conventionally generally used as a polar compound can be used. Examples include, but are not limited to, ethers and tertiary amines such as dimethoxybenzene, tetrahydrofuran, dimethoxyethane, diethylene glycol dibutyl ether, diethylene glycol dimethyl ether, 2,2-di(2-tetrahydrofuryl)propane, triethylamine, pyridine, N-methylmorpholine, N,N,N',N'-tetramethylethylenediamine, and 1,2-dipiperidinoethane. Alternatively, potassium salts such as potassium-t-amylate and potassium-t-butoxide, and sodium salts such as sodium-t-amylate can be used.

One of these polar compounds may be singly used, or two or more of these may be used in combination.

An amount of the polar compound to be used is preferably 0.01 molar equivalent or more, and more preferably 0.05 molar equivalent or more per mole of the organolithium compound used as the polymerization initiator. The polar compound is designated also as a vinylizing agent, and when the amount of the polar compound to be used is 0.01 molar equivalent or more, an effect of the addition is obtained, and a 1,2-vinyl bond tends to be easily increased. For example, when it is added in an amount of 0.1 molar equivalent per mole of the organolithium compound, a 1,2-vinyl bond can be increased by about 2%. Besides, the amount of the polar compound to be used as a vinylizing agent is preferably 1,000 molar equivalent or less, and more preferably 500 molar equivalent or less per mole of the organolithium compound. When the amount of the polar compound to be used is 1,000 molar equivalent or less, a reaction rate of a monomer can be prevented from largely changing, and thus the polymerization reaction tends to be controllable.

<Reaction Temperature>

A reaction temperature in the polymerization is not especially limited as long as the reaction favorably proceeds, and is preferably -10°C to 100°C, and more preferably 25°C to 70°C.

(Modification Process)

Through process of reacting an active terminal of the diene polymer obtained by the above-described polymerization process with a compound having a functional group interacting with silica, the functional group interacting with silica can be introduced to a polymerization end terminal of the diene polymer. Thus, a diene polymer having a modified polymerization end terminal is obtained.

The diene polymer used in a modification reaction (hereinafter also referred to as the terminal modification reaction) may be either one having a polymerization initiation terminal unmodified, or a modified one as long as it has an active terminal.

The compound used in the modification process is not especially limited as long as it has a functional group interacting with silica, and can react with an active terminal of the polymer, and for example, a terminal modifier containing a tin atom or a nitrogen atom is preferably used, and a terminal modifier containing a nitrogen atom is more preferably used.

The modification process includes coupling process involving molecular weight increase.

Specifically, when a coupling agent having a plurality of reactive sites is reacted with an active terminal of a polymer, a random diene polymer having a branched structure can be obtained.

A coupling agent containing nitrogen is also designated as a modifier, and hence, when a compound having a coupling function is selected as the modifier, a coupling effect can be obtained through the modification process.

In the modification reaction involving molecular weight increase, a modification ratio (coupling ratio) affects a molecular weight distribution of a polymer obtained after the modification. Accordingly, from the viewpoint of controlling the molecular weight distribution to 1.75 or less, the modification ratio is preferably 65% by mass or more, more preferably 70% by mass or more, and further preferably 75% by mass or more.

When the modification process is performed with a modifier having a plurality of functional groups, a multi-branched polymer is generated through a coupling reaction, but regardless of the number of functional groups, a molecular weight distribution tends to shift with its sharpness kept if the modification ratio is high.

Since the structure of a modifier less affects the molecular weight distribution, the modifier can be selected in accordance with a function and the like expected from a modified diene polymer to be produced.

It is noted that the modification ratio can be measured by a method described in Examples below.

Preferable examples of the terminal modifier containing a nitrogen atom include, from the viewpoints of polymerization productivity and a high modification ratio, an isocyanate compound, an isothiocyanate compound, an isocyanuric acid derivative, a nitrogen group-containing carbonyl compound, a nitrogen group-containing vinyl compound, a nitrogen group-containing epoxy compound, and a nitrogen group-containing alkoxysilane compound.

Among these terminal modifiers containing a nitrogen atom, a nitrogen group-containing alkoxysilane compound is more preferred from the viewpoints of polymerization productivity, a high modification ratio, and tensile strength obtained in the form of a tire.

Examples of the nitrogen group-containing alkoxysilane compound include, but are not limited to, 2,2-dimethoxy-1-(3-trimethoxysilylpropyl)-1-aza-2-silacyclopentane, 2,2-diethoxy-1-(3-triethoxysilylpropyl)-1-aza-2-silacyclopentane, 2,2-dimethoxy-1-(4-trimethoxysilylbutyl)-1-aza-2-silacyclohexane, 2,2-dimethoxy-1-(5-trimethoxysilylpentyl)-1-aza-2-silacycloheptane, 2,2-dimethoxy-1-(3-dimethoxymethylsilylpropyl)-1-aza-2-silacyclopentane, 2,2-diethoxy-1-(3-diethoxyethylsilylpropyl)-1-aza-2-silacyclopentane, 2-methoxy-2-methyl-1-(3-trimethoxysilylpropyl)-1-aza-2-silacyclopentane, 2-ethoxy-2-ethyl-1-(3-triethoxysilylpropyl)-1-aza-2-silacyclopentane, 2-methoxy-2-methyl-1-(3-dimethoxymethylsilylpropyl)-1-aza-2-silacyclopentane, 2-ethoxy-2-ethyl-1-(3-diethoxyethylsilylpropyl)-1-aza-2-silacyclopentane, tris(3-trimethoxysilylpropyl)amine, tris(3-methyldimethoxysilylpropyl)amine, tris(3-triethoxysilylpropyl)amine, tris(3-methyldiethoxysilylpropyl) amine, tris(trimethoxysilylmethyl)amine, tris(2-trimethoxysilylethyl) amine, tris(4-trimethoxysilylbutyl)amine, tetrakis[3-(2,2-dimethoxy-1-aza-2-silacyclopentane)propyl]-1,3-propanediamine, tetrakis(3-trimethoxysilylpropyl)-1,3-propanediamine, tetrakis(3-trimethoxysilylpropyl)-1,3-bisaminomethylcyclohexane, and N1-(3-(bis(3-(trimethoxysilyl)propyl)amino)propyl)-N1-methyl-N3-(3-(methyl(3-(trimethoxysilyl)propyl)amino)propyl)-N3-(3-(trimethoxysilyl)propyl)-1,3-propanediamine.

The terminal modification reaction of the polymer can be performed, for example, as a solution reaction. This solution reaction may be performed using a solution containing an unreacted monomer obtained after completing the polymerization reaction of the polymerization process, or may be performed after isolating the polymer contained in the solution and dissolving it in an appropriate solvent such as cyclohexane. Besides, when the polymerization mode is continuous mode, the terminal modification reaction preferably also employ continuous mode.

A method for adding the terminal modifier is not especially limited, and examples include a method of adding it all at once, a method of adding it dividedly, and a method of adding it continuously.

An amount of the compound to be used in the terminal modification reaction may be appropriately set in accordance with the type of the compound to be used in the reaction, and is preferably 0.1 molar equivalent or more, and more preferably 0.3 molar equivalent or more per mole of a metal atom contained in the polymerization initiator and involved in the polymerization reaction. When the amount is 0.1 molar equivalent or more, the modification reaction can be caused to sufficiently proceed, and dispersibility of silica in a rubber composition containing the polymer and silica obtained after the modification can be favorably improved.

A temperature in the terminal modification reaction is usually the same as the temperature in the polymerization reaction, and is preferably -20 to 150°C, more preferably 0 to 120°C, and further preferably 20 to 100°C. When the temperature in the modification reaction is low, the viscosity of the modified polymer tends to increase.

On the other hand, when the temperature in the modification reaction is high, the polymerization active terminal is easily deactivated. A reaction time of the modification reaction is preferably 1 minute to 5 hours, and more preferably 2 minutes to 1 hour.

(Reaction Termination Process)

When anionic polymerization is performed in the polymerization process, the polymerization reaction can be terminated by adding a known reaction terminator. Examples of the reaction terminator include, but are not limited to, alcohols such as methanol, ethanol, and isopropanol; polar solvents having an active proton such as acetic acid; and a mixture of these, and a mixture of the polar solvent and a nonpolar solvent such as hexane or cyclohexane.

An amount of the reaction terminator to be added is usually the same molar amount as or about 2-fold molar amount of an anionic polymerization initiator.

(Hydrogenation Process)

In the method for producing the hydrogenated diene polymer of the present embodiment, a hydrogenation method and reaction conditions are not especially limited, and hydrogenation may be performed by a known method under known conditions.

Usually, it is performed at 20 to 150°C under a hydrogen pressure of 0.1 to 10 MPa in the presence of a hydrogenation catalyst.

It is noted that the hydrogenation rate can be controlled by adjusting an amount of the hydrogenation catalyst, the hydrogen pressure employed in the hydrogenation reaction, a reaction time and the like.

As the hydrogenation catalyst, a compound containing any one of metals belonging to group 4 to group 11 of the periodic table can be usually used. As such a compound, although not limited to the following, a compound containing, for example, Ti, V, Co, Ni, Zr, Ru, Rh, Pd, Hf, Re, or Pt atom can be used as the hydrogenation catalyst. More specifically, examples include metallocene compounds of Ti, Zr, Hf, Co, Ni, Pd, Pt, Ru, Rh, Re, and the like; a supported heterogeneous catalyst in which a metal such as Pd, Ni, Pt, Rh or Ru is supported on a support of carbon, silica, alumina, diatomaceous earth or the like; a homogeneous Ziegler catalyst obtained by combining an organic salt or acetylacetone salt of a metal element such as Ni or Co with a reducing agent such as organoaluminum; organic metal compounds or complexes of Ru, Rh and the like; and fullerene or carbon nanotubes in which hydrogen is absorbed.

Among these, a metallocene compound containing any one of Ti, Zr, Hf, Co, and Ni is preferred from the viewpoint that the hydrogenation reaction can be performed in an inert organic solvent in a homogeneous system. A metallocene compound containing any one of Ti, Zr, and Hf is further preferred.
One of these hydrogenation catalysts may be singly used, or two or more of these may be used in combination.
In a preferable method for producing the hydrogenated diene polymer of the present embodiment, solution polymerization is performed, the resultant polymer solution is directly used to perform the modification process if necessary, and the resultant is subjected to the hydrogenation process if necessary.
The hydrogenated diene polymer of the present embodiment can be obtained from the polymer solution obtained as described above by desolvation to isolate the polymer. Examples of a method for isolating the polymer include a known desolvation method such as steam stripping, and an isolation method through a drying operation by a heat treatment using a dehydration extruder, a drying extruder, or a conveyor.

[Bale]

A bale of the present embodiment is a molded body comprising the hydrogenated diene polymer of the present embodiment described above.
A bale refers to a block-shaped molded body, and is preferably a molded body of 1,000 $cm^3$ or more. It is more preferably a rectangular bale of 17.5 kg to 35 kg.
A compression molding pressure for the molded body is preferably 3 to 30 MPa, and more preferably 10 to 20 MPa. When the compression pressure in molding is 30 MPa or less, an apparatus can be designed to be compact, and installation efficiency is high, and when the compression pressure in molding is 3 MPa or more, moldability is favorable.
A temperature of the hydrogenated diene polymer in molding is preferably 30 to 120°C, and more preferably 50 to 100°C from the viewpoints of reduction of a residual solvent and inhibition of thermal degradation.
The temperature of the hydrogenated diene polymer in molding is preferably 30°C or more because moldability is thus favorable, and on the other hand, the temperature is preferably 120°C or less because gel formation otherwise caused by thermal degradation of the rubber composition is thus suppressed.
As the temperature and the pressure in molding are higher, a specific surface area of the resultant bale is smaller.
A pressure retention time in molding is preferably 3 to 30 seconds, and more preferably 5 to 20 seconds. When the pressure retention time in compression is 30 seconds or less, production efficiency is favorable, and when it is 5 seconds or more, moldability is favorable.
For avoiding close contact among molded bodies, a resin film (packaging sheet) is preferably used for packaging.
As the type of a resin of the film, for example, polyethylene, an ethylene copolymer resin, polystyrene, high impact polystyrene, and PET can be used.
The packaging sheet preferably has good adhesiveness from the viewpoints of handleability of the molded bodys during transportation, and condensation minimally caused in a gap between the packaging sheet and the bale.

[Rubber Composition]

A rubber composition of the present embodiment contains 100 parts by mass of a rubber component including the hydrogenated diene polymer of the present embodiment described above, and another diene-based rubber, and 20 parts by mass or more and 100 parts by mass or less of a silica-based inorganic filler.
An amount of the hydrogenated diene polymer of the present embodiment in 100 parts by mass of the rubber component is preferably 10 parts by mass or more, more preferably 20 parts by mass or more, and further preferably 30 parts by mass or more.
When the amount of the hydrogenated diene polymer in the rubber component falls in the above-described range, break strength obtained in the form of a vulcanizate tends to be excellent. From the viewpoint of excellent processability in obtaining a vulcanizate, the amount is preferably 50 parts by mass or less, more preferably 45 parts by mass or less, and further preferably 40 parts by mass or less.
The rubber composition of the present embodiment preferably contains a diene-based rubber in addition to the hydrogenated diene polymer of the present embodiment. Examples of such a diene-based rubber include, but are not limited to, a conjugated diene-based polymer or a hydrogenated product thereof, a random copolymer of a conjugated diene-based compound and a vinyl aromatic compound, or a hydrogenated product thereof, a block copolymer of a conjugated diene-based compound and a vinyl aromatic compound, or a hydrogenated product thereof, a non-diene-based polymer, and a natural rubber.
Specific examples include, but are not limited to, a butadiene rubber or a hydrogenated product thereof, an isoprene rubber or a hydrogenated product thereof, a styrene-based elastomer such as a styrene-butadiene rubber or a hydrogenated product thereof, a styrene-butadiene block copolymer or a hydrogenated product thereof, or a styrene-isoprene block copolymer or a hydrogenated product thereof, and an acrylonitrile-butadiene rubber or a hydrogenated

product thereof.

The hydrogenated diene polymer of the present embodiment has a compatibility parameter close to that of a natural rubber, and hence can usually provide an effect as a compatibilizer between a natural rubber and another rubber. Specifically, a rubber composition containing three components of a rubber incompatible with a natural rubber, a natural rubber, and the hydrogenated diene polymer of the present embodiment can exhibit excellent abrasion resistance and elongation at break, which cannot be achieved without the hydrogenated diene polymer of the present embodiment.

The rubber composition is not especially limited, and an example includes a rubber composition containing three components of the hydrogenated diene polymer of the present embodiment, a natural rubber, and high cis butadiene.

Examples of the natural rubber include, but are not limited to, smoked sheets RSS No. 3 to 5, SMR, and an epoxidized natural rubber.

The various diene-based rubbers described above used in addition to the hydrogenated diene polymer of the present embodiment may be modified rubbers provided with a functional group having polarity, such as a hydroxyl group, or an amino group. In use in a tire, a butadiene rubber, an isoprene rubber, a styrene-butadiene rubber, a natural rubber, and a butyl rubber are preferably used.

The rubber composition of the present embodiment can be used in combination with a non-diene-based polymer.

Examples of the non-diene-based polymer include, but are not limited to, olefin-based elastomers such as an ethylene-propylene rubber, an ethylene-propylene-diene rubber, an ethylene-butene-diene rubber, an ethylene-butene rubber, an ethylene-hexene rubber, and an ethylene-octene rubber, a butyl rubber, a brominated butyl rubber, an acrylic rubber, a fluororubber, a silicone rubber, a chlorinated polyethylene rubber, an epichlorohydrin rubber, an $\alpha,\beta$-unsaturated nitrile-acrylic ester-conjugated diene copolymer rubber, a urethane rubber, and a polysulfide rubber.

Weight average molecular weights of the diene-based rubber used in addition to the hydrogenated diene polymer of the present embodiment, and the non-diene-based rubber used in the rubber composition of the present embodiment are preferably 2,000 or more and 2,000,000 or less, and more preferably 5,000 or more and 1,500,000 or less from the viewpoint of balance between performance and processing characteristics. Alternatively, a diene-based rubber or a non-diene-based rubber having a low molecular weight, that is, what is called a liquid rubber, can be used. One of these diene-based rubbers and the non-diene-based rubbers may be singly used, or two or more of these may be used together.

The rubber composition of the present embodiment contains a silica-based inorganic filler.

When the silica-based inorganic filler is dispersed in the rubber composition of the present embodiment, processability in obtaining a vulcanizate tends to be superior, and abrasion resistance, break strength, and balance between a low hysteresis loss property and wet skid resistance obtained in the form of a vulcanizate tend to be superior.

When the rubber composition of the present embodiment contains a silica-based inorganic filler, it can be suitably used in application to a vehicle component such as a tire or an anti-vibration rubber, and a vulcanized rubber for shoes and the like.

A content of the silica-based inorganic filler in the rubber composition of the present embodiment is 20 parts by mass or more, preferably 50 parts by mass or more, more preferably 60 parts by mass or more, and further preferably 70 parts by mass or more based on 100 parts by mass of the rubber component including the hydrogenated diene polymer of the present embodiment, and another diene-based rubber from the viewpoint that abrasion resistance and break strength obtained in the form of a vulcanizate are excellent.

From the viewpoint that processability in obtaining a vulcanizate, and balance between a low hysteresis loss property and wet skid resistance obtained in the form of a vulcanizate are excellent, the content is 100 parts by mass or less, preferably 90 parts by mass or less, more preferably 85 parts by mass or less, and further preferably 80 parts by mass or less.

The silica-based inorganic filler is not especially limited, any of known ones can be used, a solid particle containing $SiO_2$ or $Si_3Al$ as a constitutional unit is preferred, and a solid particle containing $SiO_2$ or $Si_3Al$ as a principal component of the constitutional unit is more preferred.

Here, the principal component refers to a component contained in the silica-based inorganic filler in a content of 50% by mass or more, preferably 70% by mass or more, and more preferably 80% by mass or more.

Specific examples of the silica-based inorganic filler include, but are not limited to, inorganic fibrous materials such as silica, cray, talk, mica, diatomite, wollastonite, montmorillonite, zeolite, and glass fiber. Other examples include a silica-based inorganic filler having a hydrophobized surface, and a mixture of a silica-based inorganic filler and an inorganic filler different from a silica-based filler. Among these, from the viewpoints of strength, abrasion resistance and the like, silica and glass fiber are preferred, and silica is more preferred. Examples of the silica include dry silica, wet silica, and synthetic silicate silica. Among these silicas, wet silica is preferred from the viewpoints of an effect of improving break strength, and excellent balance of wet skid resistance.

From the viewpoint of obtaining practically favorable abrasion resistance and break strength in the rubber composition of the present embodiment, a nitrogen adsorption specific surface area obtained by a BET adsorption method of the silica-based inorganic filler is preferably 100 $m^2/g$ or more and 300 $m^2/g$ or less, and more preferably 170 $m^2/g$ or more and 250 $m^2/g$ or less. If necessary, a silica-based inorganic filler having a comparatively small specific surface area

(for example, a specific surface area less than 200 $m^2/g$) and a silica-based inorganic filler having a comparatively large specific surface area (of, for example 200 $m^2/g$ or more) can be used in combination. Particularly when a silica-based inorganic filler having a comparatively large specific surface area (of, for example, 200 $m^2/g$ or more) is used in the rubber composition of the present embodiment, the rubber composition containing the hydrogenated diene polymer of the present embodiment is improved in dispersibility of silica, an effect of improving abrasion resistance in particular is achieved, and favorable break strength and a low hysteresis loss property tend to be able to be balanced at a high level.

The rubber composition of the present embodiment may contain another filler in addition to the silica-based inorganic filler, and examples of such a filler include carbon black, a metal oxide, and a metal hydroxide.

Examples of the carbon black include, but are not limited to, carbon blacks of SRF, FEF, HAF, ISAF and SAF classes. Among these, a carbon black having a nitrogen adsorption specific surface area of 50 $m^2/g$ or more and dibutyl phthalate (DBP) oil absorption of 80 mL/100 g or less is preferably used.

A content of the carbon black in the rubber composition of the present embodiment is preferably 0.5 parts by mass or more and 100 parts by mass or less, more preferably 3.0 parts by mass or more and 100 parts by mass or less, and further preferably 5.0 parts by mass or more and 50 parts by mass or less based on 100 parts by mass of the rubber component including the hydrogenated diene polymer of the present embodiment. The content of the carbon black in the rubber composition of the present embodiment is preferably 0.5 parts by mass or more based on 100 parts by mass of the rubber component from the viewpoint of exhibiting performances required in use in a tire, such as dry grip performance and conductivity, and is preferably 100 parts by mass or less based on 100 parts by mass of the rubber component from the viewpoint of dispersibility.

A metal oxide refers to a solid particle containing, as a principal component of a constituent unit, a substance represented by chemical formula MxOy (wherein M represents a metal atom, and x and y each independently represent an integer of 1 to 6).

Examples of the metal oxide include, but are not limited to, alumina, titanium oxide, magnesium oxide and zinc oxide.

Examples of the metal hydroxide include, but are not limited to, aluminum hydroxide, magnesium hydroxide and zirconium hydroxide.

The rubber composition of the present embodiment may contain a silane coupling agent. The silane coupling agent has a function to make close interaction between the rubber component and the inorganic filler, has a group having affinity with or a binding property to each of the rubber component and the silica-based inorganic filler, and a compound containing, in one molecule, a sulfur bond portion and an alkoxysilyl group or silanol group portion is preferred. Such a compound is not especially limited, and examples include bis-[3-(triethoxysilyl)-propyl]-tetrasulfide, bis-[3-(triethoxysilyl)-propyl]-disulfide, and bis-[2-(triethoxysilyl)-ethyl]-tetrasulfide.

A content of the silane coupling agent in the rubber composition of the present embodiment is preferably 0.1 parts by mass or more and 30 parts by mass or less, more preferably 0.5 parts by mass or more and 20 parts by mass or less, and further preferably 1.0 part by mass or more and 15 parts by mass or less based on 100 parts by mass of the silica-based inorganic filler. When the content of the silane coupling agent is within this range, the effect of adding the silane coupling agent described above tends to be made further remarkable.

The rubber composition of the present embodiment may contain a rubber softener from the viewpoint of improving processability.

An amount of the rubber softener to be added is expressed as a total amount, based on 100 parts by mass of the rubber component including the hydrogenated diene polymer of the present embodiment, an amount of a rubber softener precedently contained in the hydrogenated diene polymer or another diene-based rubber, and an amount of a rubber softener to be added in obtaining the rubber composition.

The rubber softener is suitably an extender oil, a liquid rubber, or a resin.

A mineral oil-based rubber softener, which is designated as a process oil or an extender oil, used for softening, expanding and improving processability of a rubber is a mixture of an aromatic ring, a naphthene ring and a paraffin chain, and one in which the number of carbon atoms of the paraffin chain is 50% or more of the number of all carbon atoms is designated as a paraffin-based softener, one in which the number of carbon atoms of the naphthene ring is 30% or more and 45% or less is designated as a naphthene-based softener, and one in which the number of aromatic carbon atoms exceeds 30% is designated as an aromatic-based softener.

A content of the rubber softener in the rubber composition of the present embodiment is preferably 0 parts by mass or more and 100 parts by mass or less, more preferably 10 parts by mass or more and 90 parts by mass or less, and further preferably 30 parts by mass or more and 90 parts by mass or less based on 100 parts by mass of the rubber component. When the content of the rubber softener is 100 parts by mass or less based on 100 parts by mass of the rubber component, bleeding out is inhibited, and a surface of the rubber composition tends to be inhibited from becoming sticky.

The rubber composition of the present embodiment preferably contains a liquid rubber from the viewpoint of improving low temperature performance.

Examples of the liquid rubber include a liquid butadiene rubber, a liquid styrene butadiene rubber, and a liquid

isoprene rubber. One of these liquid rubbers may be singly used, or two or more of these may be used in combination.

When the liquid rubber is added, the rubber composition of the present embodiment is lowered in its elastic modulus at a low temperature, and tends to be excellent in low temperature performance. Besides, a liquid rubber selected from these has an unsaturated bond in a molecule, and hence breaking strength tends to be increased through bond to the rubber component in vulcanizing the rubber composition.

A molecular weight of the liquid rubber is preferably 1,000 or more, and more preferably 1,500 or more. When the molecular weight is within this range, the number of entanglements of molecular chains contained in the liquid rubber is increased, and hence breaking strength tends to be excellent. The molecular weight of the liquid rubber is preferably 10,000 or less, and more preferably 9,000 or less. When the molecular weight is within this range, the viscosity is lowered to obtain excellent processability in obtaining a vulcanizate.

An amount of the liquid rubber to be added in the rubber composition of the present embodiment is preferably 2 parts by mass or more, more preferably 5 parts by mass or more, and further preferably 10 parts by mass or more based on 100 parts by mass of the rubber component including the hydrogenated diene polymer of the present embodiment. When the amount to be added is within this range, the rubber composition is lowered in the elastic modulus at a low temperature, and tends to be excellent in low temperature performance. Besides, from the viewpoint of improving abrasion resistance of the rubber composition, the amount is preferably 25 parts by mass or less, more preferably 20 parts by mass or less, and further preferably 15 parts by mass or less. When the content of the liquid rubber is too large, the rubber composition is softened to lower abrasion resistance, but when the amount is within this range, hardness obtained when the rubber composition is formed into a vulcanizate is improved, and thus abrasion resistance tends to be improved.

The rubber composition can be produced by mixing the hydrogenated diene polymer of the present embodiment, another diene-based rubber, the silica-based inorganic filler, carbon black or another filler if necessary, and additives such as a silane coupling agent and a rubber softener.

Examples of a method for producing the rubber composition include, but are not limited to, a melt kneading method using a general mixer such as an open roll, a Banbury mixer, a kneader, a single screw extruder, a double screw extruder, or a multi-screw extruder, and a method in which the respective components are dissolved to be mixed, and then a solvent is removed by heating.

Among these, a melt kneading method using a roll, a Banbury mixer, a kneader or an extruder is preferred from the viewpoint of productivity and good kneadability. Either of a method in which the rubber component, and other components of a filler, the silane coupling agent, and the additive are kneaded all at once, and a method in which these are mixed dividedly plural times can be employed.

The rubber composition of the present embodiment may be obtained as a vulcanized composition through vulcanization treatment with a vulcanizing agent. Examples of the vulcanizing agent include, but are not limited to, a radical generator such as an organic peroxide or an azo compound, an oxime compound, a nitroso compound, a polyamine compound, sulfur, and a sulfur compound. The sulfur compound encompasses sulfur monochloride, sulfur dichloride, a disulfide compound, and a polymer polysulfur compound.

A content of the vulcanizing agent in the rubber composition of the present embodiment is preferably 0.01 parts by mass or more and 20 parts by mass or less, and more preferably 0.1 parts by mass or more and 15 parts by mass or less based on 100 parts by mass of the rubber component. As a vulcanization method, any of conventionally known methods can be applied, and a vulcanization temperature is preferably 120°C or more and 200°C or less, and more preferably 140°C or more and 180°C or less.

A vulcanization accelerator may be used in vulcanization if necessary.

As the vulcanization accelerator, any of conventionally known materials can be used, and examples include, but are not limited to, sulfenamide-based, guanidine-based, thiuram-based, aldehyde-amine-based, aldehyde-ammonia-based, thiazole-based, thiourea-based, and dithiocarbamate-based vulcanization accelerators.

Examples of a vulcanization aid include, but are not limited to, zinc powder and stearic acid.

A content of the vulcanization accelerator is preferably 0.01 parts by mass or more and 20 parts by mass or less, and more preferably 0.1 parts by mass or more and 15 parts by mass or less based on 100 parts by mass of the rubber component including the hydrogenated diene polymer of the present embodiment.

In the rubber composition of the present embodiment, various additives such as an additional softener and an additional filler different from those described above, a heat stabilizer, an antistatic agent, a weathering stabilizer, an anti-aging agent, a colorant, and a lubricant may be used as long as the objects of the present embodiment are not impaired.

As the additional softener, any of known softeners can be used. The additional filler is not especially limited, and examples include calcium carbonate, magnesium carbonate, aluminum sulfate, and barium sulfate. As the heat stabilizer, the antistatic agent, the weathering stabilizer, the anti-aging agent, the colorant, and the lubricant, any of known materials can be respectively used.

[Tire]

The rubber composition of the present embodiment is suitably used as a rubber composition for a tire. In other words, a tire of the present embodiment is a molded body comprising the rubber composition.
The rubber composition for a tire can be used in, although not limited to, various tires such as a fuel efficient tire, an all-season tire, a high performance tire, and a studless tire; and various tire portions such as a tread, a carcass, a sidewall, and a bead portion.
In particular, the rubber composition for a tire is excellent in abrasion resistance, break strength, and balance between a low hysteresis loss property and wet skid resistance obtained in the form of a vulcanizate, and therefore, is suitably used in a tread of a fuel efficient tire or a high performance tire.

Examples

Now, the present embodiment will be more specifically described with reference to specific examples and comparative examples, and it is noted that the present invention is not limited to the following examples and comparative examples at all.
Various physical properties of the examples and comparative examples were measured by the following methods.

[Method for Measuring Physical Properties]

(Weight Average Molecular Weight (Mw) of Hydrogenated Diene Polymer)

A hydrogenated diene polymer produced in each of examples and comparative examples described below was used as a measurement sample, and a chromatogram was measured with a GPC measuring apparatus including a series of three columns using a polystyrene-based gel as a filler to obtain a weight average molecular weight (Mw) based on a calibration curve obtained using standard polystyrene.
Specific measurement conditions are described below.
The measurement was performed with 20 μL of the following measurement solution injected into the GPC measuring apparatus.

<Measurement Conditions>

Apparatus: trade name "HLC-8320GPC" manufactured by Tosoh Corporation
Eluent: tetrahydrofuran (THF) containing 5 mmol/L of triethylamine
Guard column: trade name "TSKguardcolumn Super H-H" manufactured by Tosoh Corporation
Separation columns: trade names "TSKgel Super H5000", "TSKgel Super H6000", and "TSKgel Super H7000" manufactured by Tosoh Corporation in series in the stated order
Oven temperature: 40°C
Flow rate: 0.6 ml/min
Detector: RI detector (trade name "HLC8020" manufactured by Tosoh Corporation)
Measurement solution: measurement solution obtained by dissolving 10 mg of a measurement sample in 20 mL of THF

(Mooney Viscosities of Hydrogenated Diene Polymer and Rubber Composition)

A hydrogenated diene polymer and a rubber composition produced in each of the examples and comparative examples described below were used as measurement samples, and a Mooney viscosity was measured with a Mooney viscometer (trade name "VR1132" manufactured by Ueshima Seisakusho Co., Ltd.) using an L rotor in accordance with ISO 289.
Specifically, a sample was first preheated for 1 minute at 100°C, the rotor was rotated at 2 rpm, and torque was measured after 4 minutes to be defined as a Mooney viscosity (ML (1+4)) at 100°C.

(Modification Ratio of Hydrogenated Diene Polymer)

The modification ratio of each hydrogenated diene polymer was measured by column adsorption GPC as follows

by utilizing a characteristic that a modified hydrogenated diene polymer adsorbs on a column.

A sample solution containing a measurement sample and low molecular weight internal standard polystyrene was measured for an amount of adsorption to a silica-based column based on a difference between a chromatogram measured with a column filled with a polystyrene-based gel and a chromatogram measured with a column filled with a silica-based gel, and thus, a modification ratio was obtained.

GPC measurement conditions using a polystyrene-based column were as follows.

The measurement was performed with 20 μl of the following measurement solution injected into a GPC measuring apparatus.

<GPC Measurement Conditions using Polystyrene-based Column>

Apparatus: trade name "HLC-8320GPC" manufactured by Tosoh Corporation
Eluent: THF containing 5 mmol/L of triethylamine
Guard column: trade name "TSKguardcolumn Super H-H" manufactured by Tosoh Corporation
Separation columns: trade names "TSKgel Super H5000", "TSKgel Super H6000", and "TSKgel Super H7000" manufactured by Tosoh Corporation in series in the stated order
Oven temperature: 40°C
Flow rate: 0.6 ml/min
Detector: RI detector (trade name "HLC8020" manufactured by Tosoh Corporation)
Measurement solution: measurement solution obtained by dissolving 10 mg of a sample and 5 mg of standard polystyrene in 20 mL of THF
GPC measurement conditions using a silica-based column were as follows.

The measurement was performed with 50 μl of the following measurement solution injected into a GPC measuring apparatus.

<GPC Measurement Conditions using Silica-based Column>

Apparatus: trade name "HLC-8320GPC" manufactured by Tosoh Corporation
Eluent: THF
Guard column: trade name "DIOL 4.6 x 12.5 mm 5 micron" manufactured by GL Sciences Inc.
Separation columns: trade names "Zorbax PSM-1000S", "PSM-300S", and "PSM-60S" manufactured by Agilent Technologies Japan, Ltd. in series in the stated order
Oven temperature: 40°C
Flow rate: 0.5 ml/min
Detector: RI detector (trade name "HLC8020" manufactured by Tosoh Corporation)
Calculation Method for Modification Ratio: A modification ratio (%) was obtained in accordance with the following equation assuming that a whole peak area of the chromatogram obtained with the polystyrene-based column is 100, that a peak area of the sample is P1, that a peak area of the standard polystyrene is P2, that a whole peak area of the chromatogram obtained with the silica-based column is 100, that a peak area of the sample is P3, and that a peak area of the standard polystyrene is P4:

$$\text{Modification Ratio (\%)} = [1 - (P2 \times P3)/(P1 \times P4)] \times 100$$

(wherein P1 + P2 = P3 + P4 = 100)

(Hydrogenation Rate of Hydrogenated Diene Polymer, Expression (S) and Expression (X) based on Component Ratios (mol%) "a" to "d" of Structural Units Represented by Formulas (1) to (4), and Amount of Bound Styrene)

An integrated value of an unsaturated bond portion of a diene polymer before hydrogenation was obtained by $^1$H-NMR measurement.

Subsequently, a large amount of methanol was added to a reaction solution obtained after hydrogenation to precipitate and collect a hydrogenated diene polymer.

Then, the hydrogenated diene polymer was extracted with acetone, and the hydrogenated diene polymer was

vacuum dried.

The resultant was used as a sample for the $^1$H-NMR measurement to measure the component ratios "a" to "d" (mol%) of the structural unit represented by the formula (1), the structural unit represented by the formula (2), the structural unit represented by the formula (3), and the structural unit represented by the formula (4), and measure a hydrogenation rate of a double bond of a structural unit derived from 1,3-butadiene (hereinafter simply referred to also as the "hydrogenation rate"), the expression (S), and an amount of bound styrene. Conditions in the $^1$H-NMR measurement were as follows:

<Measurement Conditions>

Measuring apparatus: JNM-LA400 (manufactured by JEOL Ltd.)
Solvent: deuterated chloroform
Measurement sample: substance sampled before or after hydrogenation of polymer
Sample concentration: 50 mg/mL
Observation frequency: 400 MHz
Chemical shift reference: TMS (tetramethylsilane)
Pulse delay: 2.904 sec
Number of scans: 64
Pulse width: 45°
Measurement temperature: 26°C

(Branch Number (Bn) of Hydrogenated Diene Polymer)

A hydrogenated diene polymer produced in each of the examples and comparative examples described below was used as a sample to measure a branch number (Bn) by viscosity detector-equipped GPC-light scattering measurement as follows.

A gel permeation chromatography (GPC) apparatus including a series of three columns using a polystyrene-based gel as a filler (trade name "GPCmax VE-2001" manufactured by Malvern) was used to obtain the absolute molecular weight of each sample based on three detectors, that is, a light scattering detector, a differential refractive index (RI) detector, and a viscosity detector (trade name "TDA305" manufactured by Malvern) connected in the stated order, and obtain an intrinsic viscosity of the sample based on results obtained by the RI detector and the viscosity detector.

A linear polymer was used assuming that it satisfies a relationship, $[\eta] = -3.883\ M^{0.771}$, and a contraction factor (g') was calculated as a ratio of the intrinsic viscosity corresponding to each molecular weight. In this expression, M represents an absolute molecular weight.

Thereafter, the contraction factor (g') thus obtained was used to calculate a branch number (Bn) defined as $g' = 6Bn/\{(Bn + 1)(Bn + 2)\}$.

As an eluent, tetrahydrofuran (hereinafter also referred to as "THF") containing 5 mmol/L of triethylamine was used.

As columns, columns of trade names "TSK gel G4000HXL", "TSKgel G5000HXL", and "TSKgel G6000HXL" manufactured by Tosoh Corporation were connected to be used.

20 mg of a sample for measurement was dissolved in 10 mL of THF to obtain a measurement solution, and 100 μL of the measurement solution was injected into the GPC measuring apparatus, and the measurement was performed at an oven temperature of 40°C at a THF flow rate of 1 mL/min.

(Al Content in Hydrogenated Diene Polymer)

An aluminum content (Al amount, unit: ppm) in a hydrogenated diene polymer produced in each of the examples and comparative examples described below was measured through elemental analysis employing inductivity coupled plasma (ICP, apparatus name: ICPS-7500, manufactured by Shimadzu Corporation).

[Methods for Evaluating Properties]

(Evaluation 1: Change over Time of Mooney Viscosity of Hydrogenated Diene Polymer)

A Mooney viscosity of the hydrogenated diene polymer produced in each of the examples and comparative examples described below was measured under the following conditions:

A Mooney viscosity was measured with a Mooney viscometer (trade name "VR1132" manufactured by Ueshima Seisakusho Co., Ltd.) using an L rotor in accordance with ISO 289.

A measurement temperature was 100°C.

A sample was first preheated for 1 minute at the test temperature, the rotor was rotated at 2 rpm, and torque was measured after 4 minutes to be defined as a Mooney viscosity ($ML_{(1+4)}$).

A difference between a Mooney viscosity measured within 4 hours after producing the hydrogenated diene polymer and a Mooney viscosity measured after storage at 25°C and a humidity of 30% for 1 month was defined as ΔML to be evaluated.

A sample having ΔML of 0 or more and less than 8 was evaluated as ○, and of 8 or more was evaluated as ×.

It was evaluated that ΔML of less than 8 was favorable in practical use.

(Evaluation 2: Cold Flow)

A hydrogenated diene polymer produced in each of the examples and comparative examples described below was used to produce a molded body having a size of 40 mm x 40 mm x 50 mm in thickness (H0), which was used as a measurement sample. A load of 1 kg was applied to the measurement sample at 25°C, the resultant was allowed to stand still for 60 minutes, and thereafter, a thickness (H60) was measured. A change rate (%) of the thickness was calculated in accordance with the following expression:

$$\text{Thickness change rate (\%)} = (H0 - H60) \times 100/H0$$

The thus obtained thickness change rate was presumed to indicate cold flow, and was expressed as an index by assuming that a result of Example 1 was 100.

It was presumed, for the evaluation, that a smaller index indicated smaller cold flow occurring during the storage and superior workability.

An index of 80 or more and 89 or less was determined as favorable (shown as ◎ in tables), of 90 or more and 99 or less was determined to have no practical problem (shown as ○ in tables), of 100 or more and 105 or less was determined to be rather poor (shown as △ in tables), and of over 105 was determined to have a practical problem (shown as × in tables).

(Evaluation 3: Bale Moldability)

A hydrogenated diene polymer produced in each of the examples and comparative examples described below was used in an amount of 35 kg to mold a bale at a molding pressure of 10 MPa and a molding temperature of 80°C.

Bale moldability was determined based on a bale size obtained after releasing compression according to the following flow:

○: a bale volume of 40,000 $cm^3$ or more and less than 50,000 $cm^3$
△: a bale volume of 50,000 $cm^3$ or more and less than 55,000 $cm^3$
× : a bale volume of 55,000 $cm^3$ or more

When a bale molded at a prescribed molding temperature and a prescribed molding pressure was difficult to change in size by releasing compression, the bale moldability was determined to be excellent.

Since bales are compressed to such sizes that a prescribed number of bales can be held in a shipping container, if the bales are not molded into a prescribed bale size but swollen, a specified number of bales cannot be held, which easily causes a problem in transportation. When bales are molded into a desired size as compressed, they can be held in a container having a prescribed size to be transported, which is advantageous in transportation cost.

[Method for Producing Hydrogenated Diene Polymer]

(Preparation of Hydrogenation Catalyst)

A hydrogenation catalyst used in preparing a hydrogenated diene polymer in each of the examples and comparative examples described below was prepared by the following method.

<Production Example 1>

A nitrogen-purged reaction vessel was charged with 2 L of dried and purified cyclohexane, and 40 mmol of bis(η5-cyclopentadienyl)titanium di-(p-tolyl) and 150 g of 1,2-polybutadiene having a molecular weight of about 1,000 (1,2-vinyl

bond content: about 85%) were dissolved therein. Thereafter, a cyclohexane solution containing 60 mmol of n-butyllithium was added to the reaction vessel, the resultant was reacted at room temperature for 5 minutes, 40 mmol of n-butanol was immediately added thereto, and the resultant was stirred to obtain a hydrogenation catalyst (TC-1). The thus obtained hydrogenation catalyst (TC-1) was stored at room temperature.

<Production Example 2>

A nitrogen-purged reaction vessel was charged with 1 L of dried and purified cyclohexane, 100 mmol of bis(η5-cyclopentadienyl)titanium dichloride was added thereto, a n-hexane solution containing 200 mmol of trimethylaluminum was added thereto under sufficient stirring, and the resultant was reacted at room temperature for about 3 days to obtain a hydrogenation catalyst (TC-2). The thus obtained hydrogenation catalyst (TC-2) was stored at room temperature.

(Polymerization of Hydrogenated Diene Polymer)

<(Example 1) Hydrogenated Diene Polymer (Sample A)>

A temperature-controllable autoclave having an internal capacity of 40 L and equipped with a stirrer and a jacket was used as a reactor, and was charged with 2,700 g of 1,3-butadiene, from which impurities had been precedently removed, and 21,000 g of cyclohexane, and the internal temperature of the reactor was kept at 46°C.

As a polymerization initiator, 6.0 mmol of n-butyllithium was supplied to the reactor.

After starting a polymerization reaction, the temperature within the reactor started to increase due to heat generation through polymerization, and the temperature within the reactor finally reached 76°C. Two minutes after reaching this reaction temperature peak, 1.5 mmol of 2,2-dimethoxy-1-(3-trimethoxysilylpropyl)-1-aza-2-silacyclopentane (compound 1) was added to the reactor to perform a coupling reaction for 20 minutes. To the thus obtained polymer solution, 1.2 mmol of methanol used as a reaction terminator was added to obtain a diene polymer solution.

To the thus obtained diene polymer solution, the hydrogenation catalyst (TC-1) prepared as described above was added in an amount, in terms of Ti, of 50 ppm per 100 parts by mass of the diene polymer, and a hydrogenation reaction was performed at a hydrogen pressure of 0.8 MPa and an average temperature of 85°C for 1 hour to obtain a solution of a hydrogenated diene polymer.

To the thus obtained solution of the hydrogenated diene polymer, 12.6 g of n-octadecyl-3-(3,5-di-t-butyl-4-hydroxyphenyl)-propionate and 3.0 g of 4,6-bis(octylthiomethyl)-o-cresol were added as antioxidants, the solvent was removed by steam stripping, and the resultant was subjected to a drying treatment with a dryer to obtain a hydrogenated diene polymer (sample A). Analysis results of the sample A are shown in Table 1.

<(Example 2) Hydrogenated Diene Polymer (Sample B)>

A hydrogenated diene polymer (sample B) was obtained in the same manner as in Example 1 except that the amount of the hydrogenation catalyst (TC-1) added was changed to 75 ppm.

Analysis results of the sample B are shown in Table 1.

<(Example 3) Hydrogenated Diene Polymer (Sample C)>

A hydrogenated diene polymer (sample C) was obtained in the same manner as in Example 1 except that the amount of the hydrogenation catalyst (TC-1) added was changed to 90 ppm.

Analysis results of the sample C are shown in Table 1.

<(Example 4) Hydrogenated Diene Polymer (Sample D)>

A hydrogenated diene polymer (sample D) was obtained in the same manner as in Example 2 except that 2.0 mmol of tetrahydrofuran (THF) and 4.0 mmol of 2,2-bis(2-oxolanyl)propane (BOP) were added to the reactor as polar compounds after adding 1,3-butadiene and cyclohexane to the reactor. Analysis results of the sample D are shown in Table 1.

<(Example 5) Hydrogenated Diene Polymer (Sample E)>

A hydrogenated diene polymer (sample E) was obtained in the same manner as in Example 2 except that 3.0 mmol of tetrahydrofuran (THF) and 5.0 mmol of 2,2-bis(2-oxolanyl)propane (BOP) were added to the reactor as polar compounds after adding 1,3-butadiene and cyclohexane to the reactor. Analysis results of the sample E are shown in Table

1.

<(Example 6) Hydrogenated Diene Polymer (Sample F)>

A hydrogenated diene polymer (sample F) was obtained in the same manner as in Example 2 except that 2,2-dimethoxy-1-(3-trimethoxysilylpropyl)-1-aza-2-silacyclopentane (compound 1) was changed to tetrakis(3-trimethoxysilylpropyl)-1,3-propanediamine (compound 2), and that the amount added was changed to 1.0 mmol. Analysis results of the sample F are shown in Table 1.

<(Example 7) Hydrogenated Diene Polymer (Sample G)>

A hydrogenated diene polymer (sample G) was obtained in the same manner as in Example 2 except that 2,2-dimethoxy-1-(3-trimethoxysilylpropyl)-1-aza-2-silacyclopentane (compound 1) was changed to bis(diethoxymethylsilylpropyl)-N-methylamine (compound 4), and that the amount added was changed to 3.0 mmol. Analysis results of the sample G are shown in Table 1.

<(Example 8, reference example) Hydrogenated Diene Polymer (Sample H)>

A hydrogenated diene polymer (sample H) was obtained in the same manner as in Example 2 except that 2,2-dimethoxy-1-(3-trimethoxysilylpropyl)-1-aza-2-silacyclopentane (compound 1) was changed to tetraethoxysilane (compound 5). Analysis results of the sample H are shown in Table 1.

<(Example 9, reference example) Hydrogenated Diene Polymer (Sample I)>

A hydrogenated diene polymer (sample I) was obtained in the same manner as in Example 2 except that the amount of 2,2-dimethoxy-1-(3-trimethoxysilylpropyl)-1-aza-2-silacyclopentane (compound 1) added was changed to 1.2 mmol. Analysis results of the sample I are shown in Table 1.

<(Example 10, reference example) Hydrogenated Diene Polymer (Sample J)>

A hydrogenated diene polymer (sample J) was obtained in the same manner as in Example 2 except that the amount of 2,2-dimethoxy-1-(3-trimethoxysilylpropyl)-1-aza-2-silacyclopentane (compound 1) added was changed to 0.8 mmol. Analysis results of the sample J are shown in Table 1.

<(Example 11) Hydrogenated Diene Polymer (Sample K)>

A hydrogenated diene polymer (sample K) was obtained in the same manner as in Example 2 except that the hydrogenation catalyst was changed to (TC-2) prepared as described above. Analysis results of the sample K are shown in Table 1.

<(Example 12) Hydrogenated Diene Polymer (Sample L)>

A hydrogenated diene polymer (sample L) was obtained in the same manner as in Example 2 except that the amount of n-butyllithium added was changed to 12.0 mmol, that the amount of 2,2-dimethoxy-1-(3-trimethoxysilylpropyl)-1-aza-2-silacyclopentane (compound 1) added was changed to 3.0 mmol, and that the amount of ethanol added as the reaction terminator was changed to 2.2 mmol. Analysis results of the sample L are shown in Table 1.

<(Example 13) Hydrogenated Diene Polymer (Sample M)>

A hydrogenated diene polymer (sample M) was obtained in the same manner as in Example 2 except that the amount of n-butyllithium added was changed to 3.0 mmol, that the amount of 2,2-dimethoxy-1-(3-trimethoxysilylpropyl)-1-aza-2-silacyclopentane (compound 1) added was changed to 0.7 mmol, and that the amount of ethanol added as the reaction terminator was changed to 0.5 mmol. Analysis results of the sample M are shown in Table 1.

<(Example 40) Hydrogenated Diene Polymer (Sample T)>

A hydrogenated diene polymer (sample T) was obtained in the same manner as in Example 4 except that the amount of 2,2-bis(2-oxolanyl)propane (BOP) added was changed to 5.0 mmol, and that the amount of the hydrogenation

catalyst (TC-1) added was changed to 90 ppm. Analysis results of the sample T are shown in Table 2.

<(Example 41) Hydrogenated Diene Polymer (Sample U)>

A hydrogenated diene polymer (sample U) was obtained in the same manner as in Example 4 except that the amount of tetrahydrofuran (THF) was changed to 3.0 mmol, and that the amount of 2,2-bis(2-oxolanyl)propane (BOP) added was changed to 5.0 mmol. Analysis results of the sample U are shown in Table 2.

<(Example 42) Hydrogenated Diene Polymer (Sample V)>

A hydrogenated diene polymer (sample V) was obtained in the same manner as in Example 40 except that the hydrogenation reaction was performed at a hydrogen pressure of 0.8 MPa at an average temperature of 85°C for 1 hour in the hydrogenation process to change the hydrogenation amount. Analysis results of the sample V are shown in Table 2.

<(Example 43) Hydrogenated Diene Polymer (Sample W)>

A hydrogenated diene polymer (sample W) was obtained in the same manner as in Example 40 except that the hydrogenation reaction was performed at a hydrogen pressure of 0.8 MPa at an average temperature of 85°C for 1 hour in the hydrogenation process to change the hydrogenation amount. Analysis results of the sample W are shown in Table 2.

<(Example 44) Hydrogenated Diene Polymer (Sample X)>

A hydrogenated diene polymer (sample X) was obtained in the same manner as in Example 40 except that the amount of tetrahydrofuran (THF) was changed to 3.5 mmol, and that the amount of 2,2-bis(2-oxolanyl)propane (BOP) added was changed to 6.0 mmol. Analysis results of the sample X are shown in Table 2.

<(Example 45) Hydrogenated Diene Polymer (Sample Y)>

A hydrogenated diene polymer (sample Y) was obtained in the same manner as in Example 44 except that the amount of the hydrogenation catalyst (TC-1) added was changed to 75 ppm. Analysis results of the sample Y are shown in Table 2.

<(Comparative Example 1) Hydrogenated Diene Polymer (Sample N)>

A hydrogenated diene polymer (sample N) was obtained in the same manner as in Example 1 except that the amount of the hydrogenation catalyst (TC-1) added was changed to 120 ppm. Analysis results of the sample N are shown in

Table 2.

<(Comparative Example 2) Hydrogenated Diene Polymer (Sample O)>

A hydrogenated diene polymer (sample O) was obtained in the same manner as in Example 1 except that the amount of the hydrogenation catalyst (TC-1) added was changed to 40 ppm. Analysis results of the sample O are shown in

Table 2.

<(Comparative Example 3) Hydrogenated Diene Polymer (Sample P)>

A hydrogenated diene polymer (sample P) was obtained in the same manner as in Example 2 except that 5.0 mmol of tetrahydrofuran (THF) and 7.0 mmol of 2,2-bis(2-oxolanyl)propane (BOP) were added to the reactor as polar compounds after adding 1,3-butadiene and cyclohexane to the reactor. Analysis results of the sample P are shown in Table 2.

<(Comparative Example 4) Hydrogenated Diene Polymer (Sample Q)>

A hydrogenated diene polymer (sample Q) was obtained in the same manner as in Example 2 except that 2,2-dimethoxy-1-(3-trimethoxysilylpropyl)-1-aza-2-silacyclopentane (compound 1) was changed to [N,N-bis(trimethylsilyl) aminopropyl]methyldiethoxysilane (compound 3), and that the amount added was changed to 3.0 mmol. Analysis results of the sample Q are shown in Table 2.

<(Comparative Example 5) Hydrogenated Diene Polymer (Sample R)>

A hydrogenated diene polymer (sample R) was obtained in the same manner as in Example 2 except that the hydrogenation catalyst was changed to (TC-2) prepared as described above, that 2,2-dimethoxy-1-(3-trimethoxysilylpropyl)-1-aza-2-silacyclopentane (compound 1) was changed to [N,N-bis(trimethylsilyl)aminopropyl]methyldiethoxysilane (compound 3), and that the amount added was changed to 3.0 mmol. Analysis results of the sample R are shown in Table 2.

<(Comparative Example 6) Hydrogenated Diene Polymer (Sample S)>

A temperature-controllable autoclave having an internal capacity of 40 L and equipped with a stirrer and a jacket was used as a reactor, and was charged with 2,160 g of 1,3-butadiene, from which impurities had been precedently removed, 300 g of styrene, and 21,000 g of cyclohexane, and with 30 mmol of tetrahydrofuran (THF) and 4.9 mmol of 2,2-bis(2-oxolanyl)propane as polar compounds, and the internal temperature of the reactor was kept at 42°C. As a polymerization initiator, 33.2 mmol of n-butyllithium was supplied to the reactor.

After starting a polymerization reaction, the temperature within the reactor started to increase due to heat generation through polymerization, and the temperature within the reactor finally reached 76°C. Two minutes after reaching this reaction temperature peak, 6.6 mmol of 2,2-dimethoxy-1-(3-trimethoxysilylpropyl)-1-aza-2-silacyclopentane (compound 1) was added to the reactor to perform a coupling reaction for 20 minutes.

To the thus obtained polymer solution, 6.0 mmol of methanol was added as a reaction terminator to obtain a diene-based polymer solution.

To the thus obtained solution of the diene-based polymer, the hydrogenation catalyst (TC-1) prepared as described above was added in an amount, in terms of Ti, of 50 ppm per 100 parts by mass of the diene-based polymer, and a hydrogenation reaction was performed at a hydrogen pressure of 0.8 MPa and an average temperature of 85°C for 1 hour to obtain a solution of a hydrogenated diene polymer.

To the thus obtained solution of the hydrogenated diene polymer, 12.6 g of n-octadecyl-3-(3,5-di-t-butyl-4-hydroxyphenyl)-propionate and 3.0 g of 4,6-bis(octylthiomethyl)-o-cresol were added as antioxidants, the solvent was removed by steam stripping, and the resultant was subjected to a drying treatment with a dryer to obtain a hydrogenated diene polymer (sample S). Analysis results of the sample S are shown in Table 2.

[Table 1]

| | | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|
| Sample | | A | B | C | D | E | F | G | H | I | J | K | L | M |
| Hydrogenation Catalyst | | TC1 | TC1 | TC1 | TC1 | TC1 | TC1 | TC1 | TC1 | TC1 | TC1 | TC2 | TC1 | TC2 |
| Weight Average Molecular Weight ($\times 10^4$) | | 45 | 45 | 45 | 45 | 45 | 67 | 45 | 45 | 42 | 38 | 45 | 13 | 110 |
| Mooney Viscosity | [ML1+4] @100°C | 55 | 60 | 81 | 57 | 54 | 67 | 63 | 62 | 56 | 53 | 60 | 28 | 118 |
| Hydrogenation Rate | [mol% in Bd] | 40 | 60 | 75 | 60 | 60 | 60 | 60 | 60 | 60 | 60 | 60 | 60 | 60 |
| Amount of Bound Styrene | [wt%] | 0 | 0 | 0 | 0 | 0 | 0 | 0 | 0 | 0 | 0 | 0 | 0 | 0 |
| Expression (S) | [mol% in Bd] | 15 | 15 | 15 | 30 | 50 | 15 | 15 | 15 | 15 | 15 | 15 | 15 | 15 |
| Modifier | | Compound 1 | Compound 1 | Compound 1 | Compound 1 | Compound 1 | Compound 2 | Compound 4 | Compound 5 | Compound 1 | Compound 1 | Compound 1 | Compound 1 | Compound 1 |
| Modification Ratio | [wt%] | 80 | 80 | 80 | 80 | 80 | 80 | 80 | 0 | 68 | 60 | 80 | 80 | 80 |
| Branch Number (Bn) | | 1.8 | 1.8 | 1.8 | 1.8 | 1.8 | 4.8 | 1.7 | 1.7 | 1.9 | 1.8 | 1.8 | 1.7 | 1.9 |
| Al Content | [ppm] | 0 | 0 | 0 | 0 | 0 | 0 | 0 | 0 | 0 | 0 | 8 | 0 | 0 |
| Expression (X) | | 2.67 | 4.00 | 5.00 | 2.00 | 1.20 | 4.00 | 4.00 | 4.00 | 4.00 | 4.00 | 4.00 | 4.00 | 4.00 |
| Evaluation 1: Change over Time of Mooney Viscosity | | ○ | ○ | ○ | ○ | ○ | ○ | ○ | ○ | ○ | ○ | × | ○ | ○ |
| Evaluation 2: Cold Flow | | ○ | ○ | ○ | ○ | ○ | ◎ | Δ | Δ | ○ | ○ | ○ | ○ | ○ |
| Evaluation 3: Bale Moldability | | × | × | × | × | ○ | × | × | × | × | × | × | × | × |
| Note: Examples 8, 9 and 10 are reference examples | | | | | | | | | | | | | | |

[Table 2]

| | | Example 40 | Example 41 | Example 42 | Example 43 | Example 44 | Example 45 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|
| Sample | | T | U | v | W | X | Y | N | O | P | Q | R | S |
| Hydrogenation Catalyst | | TC2 | TC1 | TC2 | TC1 | TC2 | TC1 | TC1 | TC1 | TC1 | TC1 | TC2 | TC1 |
| Weight Average Molecular Weight (×$10^4$) | | 45 | 45 | 46 | 44 | 30 | 30 | 45 | 45 | 45 | 40 | 45 | 40 |
| Mooney Viscosity | [ML1+4] @100°C | 75 | 48 | 70 | 61 | 57 | 50 | 92 | 50 | 50 | 55 | 98 | 62 |
| Hydrogenation Rate | [mol% in Bd] | 76 | 46 | 70 | 52 | 70 | 52 | 86 | 30 | 60 | 60 | 92 | 75 |
| Iodine Value | [I g/100 g] | | | | | | | 71 | 329 | 188 | 188 | 38 | 106 |
| Amount of Bound Styrene | [wt%] | 0 | 0 | 0 | 0 | 0 | 0 | 0 | 0 | 0 | 0 | 0 | 10 |
| Expression (S) | [mol% in Bd] | 40 | 50 | 40 | 40 | 60 | 60 | 15 | 15 | 72 | 15 | 15 | 40 |
| Modifier | | Compound 1 | Compound 1 | Compound 1 | Compound 1 | Compound 1 | Compound 1 | Compound 1 | Compound 1 | Compound 1 | Compound 3 | Compound 3 | Compound 1 |
| Modification Ratio | [wt%] | 81 | 81 | 79 | 78 | 75 | 74 | 80 | 80 | 80 | 80 | 80 | 80 |
| Branch Number (Bn) | | 1.8 | 1.8 | 1.8 | 1.8 | 1.8 | 1.8 | 1.8 | 1.8 | 1.8 | 0.2 | 0.2 | 1.8 |
| Al Content Expression (X) | [ppm] | 0 | 0 | 0 | 0 | 0 | 0 | 0 | 0 | 0 | 0 | 8 | 0 |
| | | 1.90 | 0.92 | 1.75 | 1.30 | 1.17 | 0.87 | 5.73 | 2.00 | 0.83 | 4.00 | 6.13 | 1.88 |
| Evaluation 1: Change over Time of Mooney Viscosity | | ○ | ○ | ○ | ○ | ○ | ○ | ○ | ○ | ○ | ○ | × | ○ |
| Evaluation 2 Cold Flow | | ○ | ○ | ○ | ○ | ○ | ○ | ○ | ○ | ○ | × | × | ○ |
| Evaluation 3: Bale Moldability | | Δ | ○ | ○ | ○ | ○ | ○ | × | × | ○ | × | × | ○ |

[Production of Rubber Composition]

(Examples 14 to 28 and 32 to 39, 46 to 51, reference examples 29 to 31, and Comparative Examples 7 to 16)

The hydrogenated diene polymers or the hydrogenated diene polymers (samples A to P), high cis polybutadiene (BR, "UBEPOL U150" manufactured by Ube Industries, Ltd.), a natural rubber (NR), and a styrene butadiene rubber (SBR, Y031 manufactured by Asahi Kasei Corporation) were used as rubber components to obtain rubber compositions in accordance with compositions shown in Tables 3 and 6 under conditions described below.
Names of products used as the respective components shown in Tables 3 and 6 were as follows:

- Silica (trade name "Ultrasil 7000GR" manufactured by Evonik Degussa, nitrogen adsorption specific surface area: 170 $m^2/g$)
- Carbon black (trade name "Seast KH (N339)" manufactured by Tokai Carbon Co., Ltd.)
- S-RAE Oil (trade name "Process NC140" manufactured by JX Nippon Oil & Energy Corporation)
- Liquid rubber (trade name "Kurapren LBR-302" manufactured by Kuraray Co., Ltd., molecular weight: 5,500)
- Silane coupling agent (trade name "Si75" manufactured by Evonik Degussa, bis(triethoxysilylpropyl)disulfide)
- Anti-aging agent: N-(1,3-dimethylbutyl)-N'-phenyl-p-phenylenediamine
- Vulcanization accelerator 1: N-cyclohexyl-2-benzothiazylsulfinamide
- Vulcanization accelerator 2: diphenylguanidine

The above-described materials were kneaded by the following method to obtain each rubber composition.
A closed kneader (having an internal capacity of 0.3 L) equipped with a temperature controller was used to knead, as first stage kneading, the rubber components (the hydrogenated diene polymer, the hydrogenated diene polymer, the high cis polybutadiene, the natural rubber, and the styrene butadiene rubber), the filler (silica and carbon black), the silane coupling agent, the S-RAE oil, a liquid rubber, zinc oxide, and stearic acid under conditions of a filling rate of 60% and a rotor speed of 30 to 50 rpm.
Here, the temperature of the closed mixer was controlled to obtain each rubber composition (compound) at a discharge temperature of 155 to 160°C.
Next, as second stage kneading, after the compound obtained as described above was cooled to room temperature, the anti-aging agent was added thereto, and the resultant was kneaded again for improving dispersibility of the filler.
Also in this case, the discharge temperature of the compound was adjusted to 155 to 160°C by the temperature control of the mixer.
After cooling, as third stage kneading, the resultant was kneaded with sulfur and the vulcanization accelerators 1 and 2 added thereto with an open roll set to 70°C. Thereafter, the resultant was molded, and vulcanized with a vulcanization press at 160°C for 25 minutes.
Each rubber composition before vulcanization and the rubber composition after the vulcanization were evaluated for their properties.
Specifically, the evaluation was performed by the following methods. Results are shown in Tables 3 and 6.

(Evaluation of Physical Properties)

<(Evaluation 4) Processability: Mooney Viscosity of Compound>

Each compound obtained after the second stage kneading and before the third stage kneading performed as described above was used as a sample, and the viscosity was measured with a Mooney viscometer in accordance with JIS K6300-1 after preheating at 130°C for 1 minute and after rotating the rotor at 2 rpm for 4 minutes.
The obtained result was expressed as an index by assuming that the result of Comparative Example 8 was 100.
A smaller index indicates better processability.

<(Evaluation 5) Breaking Strength>

Breaking strength was measured in accordance with a tensile test method of JIS K6251.
The obtained result was expressed as an index by assuming that the result of Comparative Example 8 was 100. A larger index indicates superior breaking strength.

<(Evaluation 6) Abrasion Resistance>

An Akron abrasion tester (manufactured by Yasuda Seiki Seisakusho, Ltd.) was used to measure an amount of abrasion caused at a load of 44.4 N through 1,000 rotations in accordance with JIS K6264-2.

The obtained result was expressed as an index by assuming that the result of Comparative Example 8 was 100. A smaller index indicates better abrasion resistance.

<(Evaluations 7 and 8) Low Temperature Performance, and Low Fuel Consumption Performance: Viscosity Parameters>

A viscosity tester "ARES" manufactured by Rheometric Scientific was used to measure a viscosity parameter in a twist mode. Each measured value was expressed as an index by assuming that a result obtained from the rubber composition of Comparative Example 8 was 100.

A tan δ measured at 50°C, a frequency of 10 Hz, and a strain of 3% was used as an index of low fuel consumption performance. A smaller index indicates better low fuel consumption performance.

A storage modulus (G') measured at -20°C, a frequency of 10 Hz, and a strain of 1% was used as an index of low temperature performance. A smaller index indicates better low temperature performance.

[Table 3]

| | | Example 14 | Example 15 | Example 16 | Example 17 | Example 18 | Example 19 | Example 20 | Example 21 | Example 22 | Example 23 |
|---|---|---|---|---|---|---|---|---|---|---|---|
| Hydrogenated Diene Polymer | Polymer | A | A | B | B | B | B | B | B | B | B |
| | [phr] | 70 | 40 | 70 | 70 | 40 | 40 | 70 | 40 | 40 | 10 |
| SBR | [phr] | 30 | 60 | 30 | 0 | 60 | 0 | 0 | 0 | 30 | 60 |
| BR | [phr] | 0 | 0 | 0 | 0 | 0 | 0 | 30 | 60 | 30 | 30 |
| NR | [phr] | 0 | 0 | 0 | 30 | 0 | 60 | 0 | 0 | 0 | 0 |
| Silica | [phr] | 85 | 85 | 85 | 85 | 85 | 85 | 85 | 85 | 85 | 85 |
| Carbon Black | [phr] | 5 | 5 | 5 | 5 | 5 | 5 | 5 | 5 | 5 | 5 |
| S-RAE Oil | [phr] | 40 | 40 | 40 | 40 | 40 | 40 | 40 | 40 | 40 | 40 |
| Liquid Rubber | [phr] | 0 | 0 | 0 | 0 | 0 | 0 | 0 | 0 | 0 | 0 |
| Silane Coupling Agent | [phr] | 6.8 | 6.8 | 6.8 | 6.8 | 6.8 | 6.8 | 6.8 | 6.8 | 6.8 | 6.8 |
| Zinc Oxide | [phr] | 2.5 | 2.5 | 2.5 | 2.5 | 2.5 | 2.5 | 2.5 | 2.5 | 2.5 | 2.5 |
| Stearic Acid | [phr] | 1 | 1 | 1 | 1 | 1 | 1 | 1 | 1 | 1 | 1 |
| Antioxidant | [phr] | 2 | 2 | 2 | 2 | 2 | 2 | 2 | 2 | 2 | 2 |
| Sulfur | [phr] | 1.7 | 1.7 | 1.7 | 1.7 | 1.7 | 1.7 | 1.7 | 1.7 | 1.7 | 1.7 |
| Vulcanization Accelerator 1 | [phr] | 1.7 | 1.7 | 1.7 | 1.7 | 1.7 | 1.7 | 1.7 | 1.7 | 1.7 | 1.7 |
| Vulcanization Accelerator 2 | [phr] | 2 | 2 | 2 | 2 | 2 | 2 | 2 | 2 | 2 | 2 |
| Evaluation 4: Processability | | 103 | 102 | 105 | 101 | 103 | 98 | 104 | 107 | 103 | 101 |
| Evaluation 5: Breaking Strength | | 110 | 105 | 115 | 117 | 108 | 110 | 112 | 108 | 110 | 105 |
| Evaluation 6: Abrasion Resistance | | 90 | 95 | 88 | 93 | 90 | 97 | 86 | 95 | 92 | 95 |
| Evaluation 7: Low Temperature Performance | | 95 | 98 | 94 | 97 | 98 | 98 | 95 | 95 | 98 | 97 |
| Evaluation 8: Low Fuel Consumption Performance | | 93 | 97 | 90 | 95 | 94 | 98 | 94 | 97 | 99 | 92 |

[Table 4]

| | | Example 24 | Example 25 | Example 26 | Example 27 | Example 28 | Example 29 | Example 30 | Example 31 | Example 32 | Example 33 | Example 34 |
|---|---|---|---|---|---|---|---|---|---|---|---|---|
| Hydrogenated Diene Polymer | Polymer | C | D | E | F | G | H | I | J | K | L | M |
| | [phr] | 40 | 40 | 40 | 40 | 40 | 40 | 40 | 40 | 40 | 40 | 40 |
| SBR | [phr] | 60 | 60 | 60 | 60 | 60 | 60 | 60 | 60 | 60 | 60 | 60 |
| BR | [phr] | 0 | 0 | 0 | 0 | 0 | 0 | 0 | 0 | 0 | 0 | 0 |
| NR | [phr] | 0 | 0 | 0 | 0 | 0 | 0 | 0 | 0 | 0 | 0 | 0 |
| Silica | [phr] | 85 | 85 | 85 | 85 | 85 | 85 | 85 | 85 | 85 | 85 | 85 |
| Carbon Black | [phr] | 5 | 5 | 5 | 5 | 5 | 5 | 5 | 5 | 5 | 5 | 5 |
| S-RAE Oil | [phr] | 40 | 40 | 40 | 40 | 40 | 40 | 40 | 40 | 40 | 40 | 40 |
| Liquid Rubber | [phr] | 0 | 0 | 0 | 0 | 0 | 0 | 0 | 0 | 0 | 0 | 0 |
| Silane Coupling Agent | [phr] | 6.8 | 6.8 | 6.8 | 6.8 | 6.8 | 6.8 | 6.8 | 6.8 | 6.8 | 6.8 | 6.8 |
| Zinc Oxide | [phr] | 2.5 | 2.5 | 2.5 | 2.5 | 2.5 | 2.5 | 2.5 | 2.5 | 2.5 | 2.5 | 2.5 |
| Stearic Acid | [phr] | 1 | 1 | 1 | 1 | 1 | 1 | 1 | 1 | 1 | 1 | 1 |
| Antioxidant | [phr] | 2 | 2 | 2 | 2 | 2 | 2 | 2 | 2 | 2 | 2 | 2 |
| Sulfur | [phr] | 1.7 | 1.7 | 1.7 | 1.7 | 1.7 | 1.7 | 1.7 | 1.7 | 1.7 | 1.7 | 1.7 |
| Vulcanization Accelerator 1 | [phr] | 1.7 | 1.7 | 1.7 | 1.7 | 1.7 | 1.7 | 1.7 | 1.7 | 1.7 | 1.7 | 1.7 |
| Vulcanization Accelerator 2 | [phr] | 2 | 2 | 2 | 2 | 2 | 2 | 2 | 2 | 2 | 2 | 2 |
| Evaluation 4: Processability | | 110 | 100 | 97 | 91 | 105 | 100 | 100 | 100 | 105 | 85 | 125 |
| Evaluation 5: Breaking Strength | | 117 | 102 | 100 | 107 | 105 | 105 | 107 | 106 | 107 | 98 | 110 |
| Evaluation 6: Abrasion Resistance | | 88 | 94 | 97 | 89 | 94 | 95 | 93 | 95 | 92 | 102 | 90 |
| Evaluation 7: Low Temperature Performance | | 98 | 98 | 98 | 97 | 97 | 97 | 96 | 98 | 97 | 98 | 97 |

(continued)

| | Example 24 | Example 25 | Example 26 | Example 27 | Example 28 | Example 29 | Example 30 | Example 31 | Example 32 | Example 33 | Example 34 |
|---|---|---|---|---|---|---|---|---|---|---|---|
| Evaluation 8: Low Fuel Consumption Performance | 100 | 97 | 98 | 92 | 95 | 103 | 98 | 99 | 95 | 90 | 98 |
| Note: Examples 29 to 31 are reference examples | | | | | | | | | | | |

[Table 5]

| | | Example 35 | Example 36 | Example 37 | Example 38 | Example 39 | Example 46 | Example 47 | Example 48 | Example 49 | Example 50 | Example 51 |
|---|---|---|---|---|---|---|---|---|---|---|---|---|
| Hydrogenated Diene Polymer | Polymer | A | B | B | B | B | T | U | V | W | X | Y |
| | [phr] | 40 | 40 | 40 | 40 | 40 | 40 | 40 | 40 | 40 | 40 | 40 |
| SBR | [phr] | 60 | 60 | 60 | 60 | 60 | 60 | 60 | 60 | 60 | 60 | 60 |
| BR | [phr] | 0 | 0 | 0 | 0 | 0 | 0 | 0 | 0 | 0 | 0 | 0 |
| NR | [phr] | 0 | 0 | 0 | 0 | 0 | 0 | 0 | 0 | 0 | 0 | 0 |
| Silica | [phr] | 75 | 75 | 85 | 85 | 85 | 85 | 85 | 85 | 85 | 85 | 85 |
| Carbon Black | [phr] | 5 | 5 | 5 | 5 | 5 | 5 | 5 | 5 | 5 | 5 | 5 |
| S-RAE Oil | [phr] | 40 | 40 | 32 | 25 | 25 | 40 | 40 | 40 | 40 | 40 | 40 |
| Liquid Rubber | [phr] | 0 | 0 | 8 | 15 | 30 | 0 | 0 | 0 | 0 | 0 | 0 |
| Silane Coupling Agent | [phr] | 6 | 6 | 6.8 | 6.8 | 6.8 | 6.8 | 6.8 | 6.8 | 6.8 | 6.8 | 6.8 |
| Zinc Oxide | [phr] | 2.5 | 2.5 | 2.5 | 2.5 | 2.5 | 2.5 | 2.5 | 2.5 | 2.5 | 2.5 | 2.5 |
| Stearic Acid | [phr] | 1 | 1 | 1 | 1 | 1 | 1 | 1 | 1 | 1 | 1 | 1 |
| Antioxidant | [phr] | 2 | 2 | 2 | 2 | 2 | 2 | 2 | 2 | 2 | 2 | 2 |
| Sulfur | [phr] | 1.7 | 1.7 | 1.7 | 1.7 | 1.7 | 1.7 | 1.7 | 1.7 | 1.7 | 1.7 | 1.7 |
| Vulcanization Accelerator 1 | [phr] | 1.7 | 1.7 | 1.7 | 1.7 | 1.7 | 1.7 | 1.7 | 1.7 | 1.7 | 1.7 | 1.7 |
| Vulcanization Accelerator 2 | [phr] | 2 | 2 | 2 | 2 | 2 | 2 | 2 | 2 | 2 | 2 | 2 |
| Evaluation 4: Processability | | 92 | 95 | 100 | 97 | 95 | 100 | 92 | 100 | 97 | 100 | 90 |
| Evaluation 5: Breaking Strength | | 103 | 105 | 110 | 114 | 116 | 102 | 100 | 102 | 101 | 101 | 100 |
| Evaluation 6: Abrasion Resistance | | 97 | 94 | 91 | 97 | 105 | 97 | 100 | 98 | 99 | 99 | 100 |
| Evaluation 7: Low Temperature Performance | | 94 | 93 | 94 | 90 | 88 | 98 | 94 | 98 | 98 | 98 | 93 |
| Evaluation 8: Low Fuel Consumption Performance | | 90 | 87 | 95 | 94 | 94 | 98 | 101 | 98 | 99 | 99 | 102 |

[Table 6]

| | | Comparative Example 7 | Comparative Example 8 | Comparative Example 9 | Comparative Example 10 | Comparative Example 11 | Comparative Example 12 | Comparative Example 13 | Comparative Example 14 | Comparative Example 15 | Comparative Example 16 |
|---|---|---|---|---|---|---|---|---|---|---|---|
| Hydrogenated Diene Polymer | Polymer | N | O | P | Q | R | N | O | S | - | - |
| | [phr] | 40 | 40 | 40 | 40 | 40 | 40 | 40 | 40 | 0 | 0 |
| SBR | [phr] | 60 | 60 | 60 | 60 | 60 | 60 | 60 | 60 | 60 | 60 |
| BR | [phr] | 0 | 0 | 0 | 0 | 0 | 0 | 0 | 0 | 40 | 40 |
| NR | [phr] | 0 | 0 | 0 | 0 | 0 | 0 | 0 | 0 | 0 | 0 |
| Silica | [phr] | 85 | 85 | 85 | 85 | 85 | 75 | 75 | 85 | 85 | 85 |
| Carbon Black | [phr] | 5 | 5 | 5 | 5 | 5 | 5 | 5 | 5 | 5 | 5 |
| S-RAE Oil | [phr] | 40 | 40 | 40 | 40 | 40 | 40 | 40 | 40 | 40 | 25 |
| Liquid Rubber | [phr] | 0 | 0 | 0 | 0 | 0 | 0 | 0 | 0 | 0 | 15 |
| Silane Coupling Agent | [phr] | 6.8 | 6.8 | 6.8 | 6.8 | 6.8 | 6 | 6 | 6.8 | 6.8 | 6.8 |
| Zinc Oxide | [phr] | 2.5 | 2.5 | 2.5 | 2.5 | 2.5 | 2.5 | 2.5 | 2.5 | 2.5 | 2.5 |
| Stearic Acid | [phr] | 1 | 1 | 1 | 1 | 1 | 1 | 1 | 1 | 1 | 1 |
| Antioxidant | [phr] | 2 | 2 | 2 | 2 | 2 | 2 | 2 | 2 | 2 | 2 |
| Sulfur | [phr] | 1.7 | 1.7 | 1.7 | 1.7 | 1.7 | 1.7 | 1.7 | 1.7 | 1.7 | 1.7 |
| Vulcanization Accelerator 1 | [phr] | 1.7 | 1.7 | 1.7 | 1.7 | 1.7 | 1.7 | 1.7 | 1.7 | 1.7 | 1.7 |
| Vulcanization Accelerator 2 | [phr] | 2 | 2 | 2 | 2 | 2 | 2 | 2 | 2 | 2 | 2 |
| Evaluation 4: Processability | | 120 | 100 | 97 | 121 | 130 | 105 | 95 | 105 | 100 | 100 |
| Evaluation 5: Breaking Strength | | 110 | 100 | 95 | 103 | 97 | 90 | 90 | 110 | 85 | 98 |
| Evaluation 6: Abrasion Resistance | | 100 | 100 | 105 | 100 | 103 | 108 | 107 | 102 | 105 | 115 |
| Evaluation 7: Low Temperature Performance | | 105 | 100 | 102 | 100 | 102 | 103 | 101 | 115 | 100 | 95 |

(continued)

| | Comparative Example 7 | Comparative Example 8 | Comparative Example 9 | Comparative Example 10 | Comparative Example 11 | Comparative Example 12 | Comparative Example 13 | Comparative Example 14 | Comparative Example 15 | Comparative Example 16 |
|---|---|---|---|---|---|---|---|---|---|---|
| Evaluation 8: Low Fuel Consumption Performance | 110 | 100 | 104 | 95 | 110 | 103 | 102 | 105 | 108 | 107 |

As shown in Tables 4 to 6, it was confirmed that Examples 14 to 39 and 46 to 51 are excellent in low temperature performance and abrasion resistance of the rubber compositions, and are excellent further in breaking strength as compared with Comparative Examples 7 to 16.

Industrial Applicability

The rubber composition of the present invention is industrially applicable in the fields of tire treads, interiors and exteriors of vehicles, anti-vibration rubbers, belts, shoes, foam materials, and various industrial products.

## Claims

1. **1.** A hydrogenated diene polymer, having a branch number (Bn) measured by viscosity detector-equipped GPC-light scattering measurement of 1.5 or more,

   satisfying the following expression (S) assuming that component ratios (mol%) of a structural unit represented by the following formula (1), a structural unit represented by the following formula (2), a structural unit represented by the following formula (3), and a structural unit represented by the following formula (4) are respectively a, b, c, and d, and
   having a hydrogenation rate of 40 to 85%,
   having a modification ratio of 70% by mass or more, and
   having content of the aromatic vinyl monomer unit of 0.1% by mass or less:

   $10 \leq [(a + b)/(a + b + c + d)] \times 100 \leq 70$ Expression (S):

   (1) 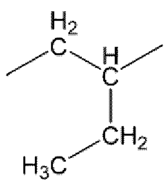 (2) 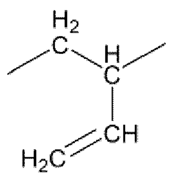

   (3) 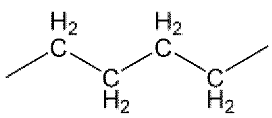 (4) 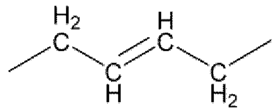

2. **2.** The hydrogenated diene polymer according to claim 1, having a branch number (Bn) measured by viscosity detector-equipped GPC-light scattering measurement of 1.5 or more,

   satisfying the following expression (S), and
   having a hydrogenation rate of 40 to 80%:

   $10 \leq [(a + b)/(a + b + c + d)] \times 100 \leq 60$ Expression (S):

3. **3.** The hydrogenated diene polymer according to claim 1 or 2, wherein the following expression (X) is 2.0 or less:

   Expression (X): $(a + c)/(a + b)$

4. **4.** The hydrogenated diene polymer according to claim 3, wherein the expression (X) is 0.8 or more and 2.0 or less.

5. **5.** The hydrogenated diene polymer according to any one of claims 1 to 4, having a hydrogenation rate of 51% or more.

6. **6.** The hydrogenated diene polymer according to any one of claims 1 to 5, having a hydrogenation rate of 71% or less.

7. The hydrogenated diene polymer according to any one of claims 1 to 6, comprising a nitrogen atom.

8. The hydrogenated diene polymer according to any one of claims 1 to 7, having an aluminum content of less than 2 ppm.

9. A bale that is a molded body comprising the hydrogenated diene polymer according to any one of claims 1 to 8.

10. A rubber composition, comprising:

100 parts by mass of a rubber component containing 10 parts by mass or more and 50 parts by mass or less of the hydrogenated diene polymer according to any one of claims 1 to 8, and 50 parts by mass or more and 90 parts by mass or less of a diene-based rubber; and
20 parts by mass or more and 100 parts by mass or less of a silica-based inorganic filler.

11. The rubber composition according to claim 10, comprising 2 parts by mass or more and 25 parts by mass or less of a liquid rubber.

12. A tire that is a molded body comprising the rubber composition according to claim 11.

## Patentansprüche

1. Hydriertes Dienpolymer mit einer Zweigzahl (Bn), gemessen durch eine mit einem Viskositätsdetektor ausgestattete GPC-Lichtstreuungsmessung, von 1,5 oder mehr,

wobei der folgende Ausdruck (S) erfüllt ist, unter der Annahme, dass die Komponentenanteile (Mol-%) einer Struktureinheit der folgenden Formel (1), einer Struktureinheit der folgenden Formel (2), einer Struktureinheit der folgenden Formel (3) und einer Struktureinheit der folgenden Formel (4) jeweils a, b, c und d sind, und
welches einen Hydrierungsgrad von 40 bis 85 % aufweist,
welches einen Modifizierungsgrad von 70 Massen-% oder mehr aufweist, und
welches einen Gehalt der aromatischen Vinylmonomereinheiten von 0,1 Massen-% oder weniger aufweist:

$$\text{Ausdruck (S): } 10 \leq [(a + b)/(a + b + c + d)] \times 100 \leq 70$$

(1) 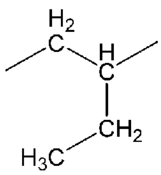

(2) 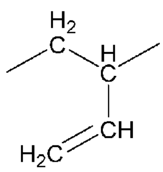

(3) 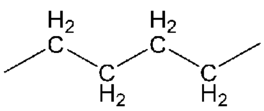

(4) 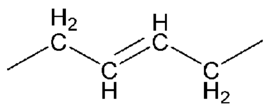

2. Hydriertes Dienpolymer nach Anspruch 1 mit einer Zweigzahl (Bn), gemessen durch eine mit einem Viskositätsdetektor ausgestattete GPC-Lichtstreuungsmessung von 1,5 oder mehr,

wobei der folgende Ausdruck (S) erfüll ist, und
welches einen Hydrierungsgrad von 40 bis 80 % aufweist:

$$\text{Ausdruck (S): } 10 \leq [(a + b)/(a + b + c + d)] \times 100 \leq 60.$$

3. Hydriertes Dienpolymer nach Anspruch 1 oder 2, wobei der folgende Ausdruck (X) 2,0 oder weniger beträgt:

Ausdruck (X): (a + c)/(a + b).

**4.** Hydriertes Dienpolymer nach Anspruch 3, wobei der Ausdruck (X) 0,8 oder mehr und 2,0 oder weniger beträgt.

**5.** Hydriertes Dienpolymer nach einem der Ansprüche 1 bis 4, welches eine Hydrierungsgrad von 51 % oder mehr aufweist.

**6.** Hydriertes Dienpolymer nach einem der Ansprüche 1 bis 5, welches einen Hydrierungsgrad von 71 % oder weniger aufweist.

**7.** Hydriertes Dienpolymer nach einem der Ansprüche 1 bis 6, welches ein Stickstoffatom enthält.

**8.** Hydriertes Dienpolymer nach einem der Ansprüche 1 bis 7, welches einen Aluminiumgehalt von weniger als 2 ppm aufweist.

**9.** Ballen, wobei es sich um einen Formkörper handelt, der das hydrierte Dienpolymer nach einem der Ansprüche 1 bis 8 enthält.

**10.** Kautschukzusammensetzung, umfassend:

100 Massenteile einer Kautschukkomponente, die 10 Massenteile oder mehr und 50 Massenteile oder weniger des hydrierten Dienpolymers nach einem der Ansprüche 1 bis 8 und 50 Massenteile oder mehr und 90 Massenteile oder weniger eines Kautschuks auf Dienbasis enthält; und
20 Massenteile oder mehr und 100 Massenteile oder weniger eines anorganischen Füllstoffs auf Siliciumdioxidbasis.

**11.** Kautschukzusammensetzung nach Anspruch 10, umfassend 2 Massenteile oder mehr und 25 Massenteile oder weniger eines flüssigen Kautschuks.

**12.** Reifen, wobei es sich um einen Formkörper handelt, der die Kautschukzusammensetzung nach Anspruch 11 enthält.

## Revendications

**1.** Polymère de diène hydrogéné, présentant un degré de ramification (Bn) mesuré par mesure CPG équipée d'un viscosimètre-diffusion de la lumière de 1,5 ou plus, satisfaisant l'expression (S) suivante en supposant que les rapports de composants (% en moles) d'un motif structural représenté par la formule (1) suivante, d'un motif structural représenté par la formule (2) suivante, d'un motif structural représenté par la formule (3) suivante, et d'un motif structural représenté par la formule (4) suivante sont respectivement a, b, c, et d, et

présentant un taux d'hydrogénation de 40 à 85 %,
présentant un rapport de modification de 70 % en masse ou plus, et
présentant une teneur du motif monomère vinylique aromatique de 0,1 % en masse ou moins :

$$\text{Expression (S)} : 10 \leq [(a + b)/(a + b + c + d)] \times 100 \leq 70$$

(1) 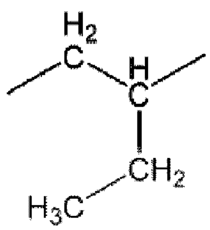

(2) 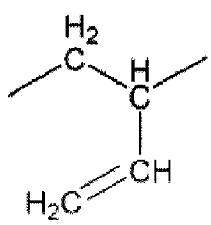

(3) 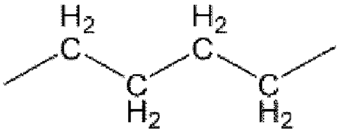 (4) 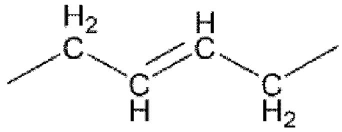

2. Polymère de diène hydrogéné selon la revendication 1, présentant un degré de ramification (Bn) mesuré par mesure CPG équipée d'un viscosimètre-diffusion de la lumière de 1,5 ou plus, satisfaisant l'expression (S) suivante, et présentant un taux d'hydrogénation de 40 à 80 % :

$$\text{Expression (S)} : 10 \leq [(a + b)/(a + b + c + d)] \times 100 \leq 60$$

3. Polymère de diène hydrogéné selon la revendication 1 ou 2, dans lequel l'expression (X) suivante est de 2,0 ou moins :

$$\text{Expression (X)} : (a + c)/(a + b)$$

4. Polymère de diène hydrogéné selon la revendication 3, dans lequel l'expression (X) est de 0,8 ou plus et de 2,0 ou moins.

5. Polymère de diène hydrogéné selon l'une quelconque des revendications 1 à 4, présentant un taux d'hydrogénation de 51 % ou plus.

6. Polymère de diène hydrogéné selon l'une quelconque des revendications 1 à 5, présentant un taux d'hydrogénation de 71 % ou moins.

7. Polymère de diène hydrogéné selon l'une quelconque des revendications 1 à 6, comprenant un atome d'azote.

8. Polymère de diène hydrogéné selon l'une quelconque des revendications 1 à 7, présentant une teneur en aluminium inférieure à 2 ppm.

9. Balle qui est un corps moulé comprenant le polymère de diène hydrogéné selon l'une quelconque des revendications 1 à 8.

10. Composition de caoutchouc, comprenant :
100 parties en masse d'un composant de caoutchouc contenant 10 parties en masse ou plus et 50 parties en masse ou moins du polymère de diène hydrogéné selon l'une quelconque des revendications 1 à 8, et 50 parties en masse ou plus et 90 parties en masse ou moins d'un caoutchouc à base de diène ; et 20 parties en masse ou plus et 100 parties en masse ou moins d'une charge inorganique à base de silice.

11. Composition de caoutchouc selon la revendication 10, comprenant 2 parties en masse ou plus et 25 parties en masse ou moins d'un caoutchouc liquide.

12. Pneu qui est un corps moulé comprenant la composition de caoutchouc selon la revendication 11.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2008050432 A
- WO 2003085010 A
- WO 2019151126 A
- WO 2019151127 A
- WO 2019078083 A
- WO 2009060931 A1
- JP H08245839 A
- WO 9605250 A
- JP 2000053706 A
- WO 2002002663 A
- WO 2015006179 A
- JP 2020045500 A